(19)

**Europäisches Patentamt**
**European Patent Office**
**Office européen des brevets**

(11) **EP 4 517 655 B1**

(12) **EUROPEAN PATENT SPECIFICATION**

(45) Date of publication and mention
of the grant of the patent:
**11.03.2026 Bulletin 2026/11**

(21) Application number: **24196117.6**

(22) Date of filing: **23.08.2024**

(51) International Patent Classification (IPC):
**G06T 5/77** *(2024.01)*

(52) Cooperative Patent Classification (CPC):
**G06T 5/77;** G06T 2207/10028

(54) **POINT CLOUD FILLING METHOD, DEVICE, EQUIPMENT, AND STORAGE MEDIUM**

VERFAHREN, VORRICHTUNG, AUSRÜSTUNG UND SPEICHERMEDIUM ZUM FÜLLEN VON PUNKTWOLKEN

MÉTHODE DE REMPLISSAGE DE NUAGES DE POINTS, DISPOSITIF, ÉQUIPEMENT ET SUPPORT DE STOCKAGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **04.09.2023 CN 202311138998**

(43) Date of publication of application:
**05.03.2025 Bulletin 2025/10**

(73) Proprietor: **Suteng Innovation Technology Co., Ltd.**
**Shenzhen City Guangdong 518000 (CN)**

(72) Inventor: **Wang, Siyu**
**Shenzhen, 518000 (CN)**

(74) Representative: **RGTH**
**Patentanwälte PartGmbB**
**Neuer Wall 10**
**20354 Hamburg (DE)**

(56) References cited:
**US-A1- 2018 190 016     US-A1- 2021 256 740**

- **"SAT 2015 18th International Conference, Austin, TX, USA, September 24-27, 2015", vol. 2768, 1 January 2003, SPRINGER, Berlin, Heidelberg, ISBN: 3540745491, article PAVEL CHALMOVIANSK◆ ET AL: "Filling Holes in Point Clouds", pages: 196 - 212, XP055431959, 032548, DOI: 10.1007/978-3-540-39422-8_14**

## Description

### CROSS-REFERENCE TO RELATED APPLICATION

The present application claims the benefit of priority to Chinese Patent Application No. 202311138998.7, filed on September 04, 2023.

### TECHNICAL FIELD

The present application relates to the technical field of LiDAR, particularly to a point cloud filling method, device, equipment, and storage medium.

### BACKGROUND

Light Detecting and Ranging (LiDAR) is an active remote sensing device that uses photoelectric detection technology. LiDAR emits detection signals to a target and process the received echo signals to obtain information about the target's distance, size, speed, and reflectivity. However, during the operation of LiDAR, it is inevitably interfered by environmental noise, other radar noise, internal noise, etc., causing occasional effective echo loss or inaccurate ranging, which in turn leads to missing points in the point cloud data.

US20210256740A1 discloses a method for increasing point cloud sampling density, a point cloud processing system, and a readable storage medium. The method for increasing point cloud sampling density includes operations that performing a projection transformation on a three-dimensional first point cloud based on a given plane to obtain a first planar image, inserting a plurality of pixel points in the blank area based on a pixel point around a blank area in the first planar image to obtain a second planar image, and performing an inverse projection transformation on the second planar image to obtain a reconstructed three-dimensional second point cloud. This disclosure replaces the insertion point in the three-dimensional point cloud with the insertion of the pixel point in the planar image, which can reduce the difficulty of data inserting.

US20180190016A1 discloses a vehicle computing system performs enhances relatively sparse data collected by a LiDAR sensor by increasing the density of points in certain portions of the scan. For instance, the system generates 3D triangles based on a point cloud collected by the LiDAR sensor and filters the 3D triangles to identify a subset of 3D triangles that are proximate to the ground. The system interpolates points within the subset of 3D triangles to identify additional points on the ground. As another example, the system uses data collected by the LiDAR sensor to identify vertical structures and interpolate additional points on those vertical structures. The enhanced data can be used for a variety of applications related to autonomous vehicle navigation and HD map generation, such as detecting lane markings on the road in front of the vehicle or determining a change in the vehicle's position and orientation.

### SUMMARY

The invention is set out in the appended set of claims The main objective of the present application is to provide a point cloud filling method, device, equipment, and storage medium, aiming to solve the technical problem of low accuracy in point cloud filling, resulting in low recognition accuracy of LiDAR.

Embodiments of the present application provide a point cloud filling method, which includes the following steps: obtaining the point cloud data collected by the LiDAR, and determining a position of a point missing pixel from the point cloud data; obtaining a point filling mark of the position of the point missing pixel; when the point filling mark meets a preset requirement, determining the position of the point missing pixel as the position of a point filling pixel; performing point cloud filling on the position of the point filling pixel according to the point filling mark.

Embodiments of the present application provide a point cloud filling device, which includes: a point missing pixel determining module, used to obtain the point cloud data collected by the LiDAR and determine the point missing pixel position from the point cloud data; an obtaining module, used to obtain a point filling mark of the position of the point missing pixel; a point filling pixel determining module, used to determine the position of the point missing pixel as the position of a point filling pixel when the point filling mark meets a preset requirement;
a filling module, used to perform point cloud filling on the position of the point filling pixel according to the point filling mark.

Embodiments of the present application provide a piece of point cloud filling equipment, which includes: a memory, a processor, and a point cloud filling program stored in the memory and executable on the processor, wherein the point cloud filling program is configured to implement the point cloud filling method embodiments.

Embodiments of the present application provide a storage medium, on which a point cloud filling program is stored. The point cloud filling program implements the point cloud filling method embodiments when executed by a processor.

The point cloud filling method provided by the present application determines a point missing pixel position from the point cloud data collected by the LiDAR; obtains the point filling mark of the point missing pixel position; determines the point missing pixel position as the point filling pixel position when the point filling mark meets the preset requirement; and performs point cloud filling on the point filling pixel position according to the point filling mark. In this way, after determining the point missing pixel position from the point cloud data collected by the LiDAR, it judges whether the point filling mark of the point missing pixel position meets the preset requirement based on the point cloud data around the point missing pixel position. If so, it indicates that the point missing pixel position is a point filling pixel position that needs point cloud filling. The point filling distance and point filling reflectivity are calculated based on the point filling mark, and point cloud filling is performed on the point filling pixel position using the calculation results. This point cloud filling method can locate the point filling pixel position that needs point cloud filling from the point missing pixel position and fill the distance and reflectivity of the point filling pixel position based on the point cloud data around the point filling pixel position, effectively improving the accuracy of point cloud filling, maintaining the edge features of the object being measured in the field of view, and not causing contour deformation of the object being measured due to point cloud filling, thereby improving the accuracy of LiDAR recognition.

## BRIEF DESCRIPTION OF DRAWINGS

FIG. 1 is a schematic structural diagram of the hardware operating environment of the point cloud filling equipment according to an embodiment;

FIG. 2 is a schematic structural diagram of a LiDAR according to an embodiment of the point cloud filling method;

FIG. 3 is a flowchart of an embodiment of the point cloud filling method;

FIG. 4 is a schematic comparison diagram showing the effect of an embodiment of the point cloud filling method;

FIG. 5 is a flowchart of an embodiment of the point cloud filling method;

FIG. 6 is a flowchart of an embodiment of the point cloud filling method;

FIG. 7 is an illustrative example diagram of point cloud filling according to an embodiment of the point cloud filling method;

FIG. 8 is a schematic diagram of the functional modules of an embodiment of the point cloud filling device.

The implementation, functional features, and advantages will be further described in conjunction with the embodiments and with reference to the accompanying drawings.

## DETAILED DESCRIPTION

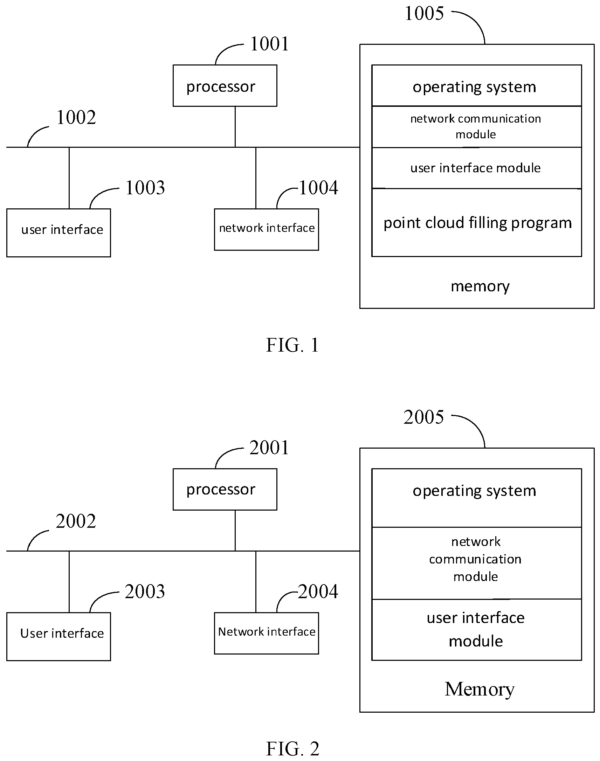

Referring to FIG. 1, FIG. 1 is a schematic structural diagram of a point cloud filling device involved in the embodiment of the present application.

As shown in FIG. 1, the point cloud filling device may include: a processor 1001, such as a Central Processing Unit (CPU), a communication bus 1002, a user interface 1003, a network interface 1004, and a memory 1005. The communication bus 1002 is used to realize communication connections between these components. The user interface 1003 may include a display screen, input units such as a keyboard, and optionally may also include standard wired interfaces and wireless interfaces. The network interface 1004 may optionally include standard wired interfaces and wireless interfaces (such as Wireless-Fidelity, Wi-Fi, interfaces). The memory 1005 can be high-speed Random Access Memory (RAM), or stable Non-Volatile Memory (NVM), such as disk storage. The memory 1005 may also optionally be a storage device independent of the aforementioned processor 1001.

The structure shown in FIG. 1 may include more or fewer components than shown, or combine some components, or arrange components differently.

As shown in FIG. 1, the memory 1005 as a storage medium may include an operating system, a network communication module, a user interface module, and a point cloud filling program.

In the point cloud filling device shown in FIG. 1, the network interface 1004 is mainly used for data communication with a network-integrated platform workstation; the user interface 1003 is mainly used for data interaction with the user; the processor 1001 and memory 1005 in the point cloud filling device may be set in the point cloud filling device, and the point cloud filling device calls the point cloud filling program stored in the memory 1005 through the processor 1001 and executes the point cloud filling method provided in the embodiments of the present application.

The missing point problem of point cloud data will lead to inaccurate recognition by LiDAR. If missing point positions occur continuously, the contour of the object being measured cannot be effectively recognized, and the category of the object cannot be identified. If the missing point position happens to occur at the edge of the object being measured, it will lead to inaccurate contour recognition of the object, which will affect the accuracy of detection. For the missing point problem of point cloud data, the distance and reflectivity can be inferred based on the point cloud data of the previous frame, and the points can be filled based on the theoretical coordinate positions of the point cloud data. However, the causes of the missing point problem in point cloud data are diverse, requiring a more accurate point cloud filling method to determine whether the point missing pixel position needs point cloud filling and the data to be filled.

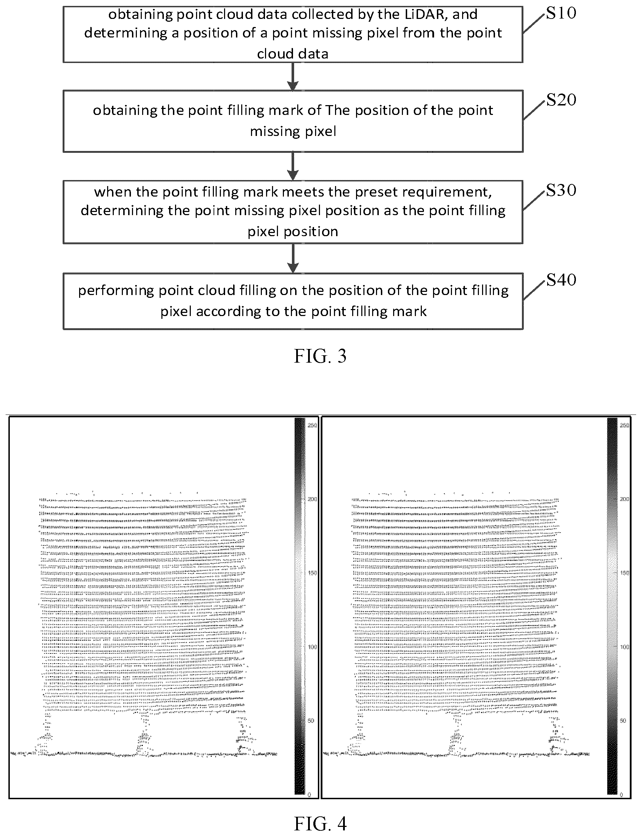

Referring to FIG. 3, FIG. 3 is a flowchart of an embodiment of the point cloud filling method.

In an embodiment, the point cloud filling method includes the following steps:

Step S10, obtaining point cloud data collected by the LiDAR, and determining a position of a point missing pixel from the point cloud data.

The execution subject of this embodiment is the point cloud filling device, and it can also be other devices that can achieve the same or similar functions, such as a point cloud filling processor, etc.

The point cloud data can be collected by the LiDAR during detection. The type of LiDAR includes mechanical LiDAR, MEMS LiDAR, hybrid scanning LiDAR, Flash LiDAR, etc. The point missing pixel position refers to the pixel position that lacks detection data. After obtaining the point cloud data collected by the LiDAR, the point missing pixel position is determined from the point cloud data. The detection data of each pixel position in the point cloud includes at least one or more of coordinates, distance, reflectivity, and speed.

Step S20, obtaining the point filling mark of the position of the point missing pixel.

The point filling mark refers to the mark at the point missing pixel position, which includes a transverse point filling mark and a longitudinal point filling mark.

Further, to effectively improve the accuracy of determining the point filling mark of the point missing pixel position, step S20 includes: when a first smoothing feature value is less than the smoothing threshold, determining the transverse point filling mark of the point missing pixel position as the first mark; otherwise, the transverse point filling mark is the second mark; the first mark and the second mark are different. when the second smoothing feature value is less than the smoothing threshold, determining the longitudinal point filling mark of the point missing pixel position as the first mark; otherwise, the longitudinal point filling mark is the second mark.

The first smoothing feature value represents the degree of distance smoothness of the point cloud in the first transverse neighborhood constructed with the point missing pixel position as the center; when it is determined that the first smoothing feature value is less than the smoothing threshold, the transverse point filling mark of the point missing pixel position is determined as the first mark, which can be 1; when it is determined that the first smoothing feature value is greater than or equal to the smoothing threshold, the transverse point filling mark is determined as the second mark, which can be 0. Correspondingly, the second smoothing feature value represents the degree of distance smoothness of the point cloud in the first longitudinal neighborhood constructed with the point missing pixel position as the center; when it is determined that the second smoothing feature value is less than the smoothing threshold, the longitudinal point filling mark of the point missing pixel position is determined as the first mark; when it is determined that the second smoothing feature value is greater than or equal to the smoothing threshold, the longitudinal point filling mark is the second mark.

Step S30, when the point filling mark meets the preset requirement, determining the point missing pixel position as the point filling pixel position.

The point filling pixel position refers to the pixel position that needs point cloud filling. After obtaining the point filling mark of the point missing pixel position, it is necessary to determine whether the point filling mark meets the preset requirement. If so, the point missing pixel position is determined as the point filling pixel position. By judging the point filling mark, it is determined whether the point missing pixel position in the point cloud data needs point cloud filling, avoiding inaccurate point cloud data caused by blind point cloud filling, and thereby affecting the recognition of the edge features of the object being measured.

Further, to effectively improve the accuracy of determining the point filling pixel position, step S30 includes: when the transverse point filling mark is the first mark or the longitudinal point filling mark is the first mark, determining the point missing pixel position as the point filling pixel position.

The point filling mark of the point missing pixel position includes the transverse point filling mark and the longitudinal point filling mark. The point filling mark meets the preset requirement essentially by judging whether the transverse point filling mark is the first mark or whether the longitudinal point filling mark is the first mark. When either of the above conditions is met, the point missing pixel position is determined as the point filling pixel position.

Step S40, performing point cloud filling on the position of the point filling pixel according to the point filling mark.

After determining the point filling pixel position, combining the point filling mark, the transverse reference distance, the transverse reference reflectivity list, the longitudinal reference distance, and the longitudinal reference reflectivity list of the point filling pixel position, comprehensively determining the point filling distance and point filling reflectivity, and then performing point cloud filling on the point filling pixel position using the point filling distance and point filling reflectivity as the detection data of the point missing pixel position. Referring to FIG. 4, FIG. 4 is a comparative diagram showing the effect before and after executing the point cloud filling method. The left side represents the point cloud data before filling, and the right side represents the point cloud data after filling. Through comparison, the point cloud data after filling has supplemented a large number of point missing pixel positions, reducing the holes in the point cloud data, ensuring the integrity and continuity of the point cloud data, and facilitating the clustering, recognition, and other perception algorithms of the point cloud processing algorithm at the back end.

In an embodiment, by obtaining the point cloud data collected by the LiDAR, determining the point missing pixel position from the point cloud data; obtaining the point filling mark of the point missing pixel position; when the point filling mark meets the preset requirement, determining the point missing pixel position as the point filling pixel position; performing point cloud filling on the point filling pixel position according to the point filling mark. In this way, after determining the point missing pixel position from the point cloud data collected by the LiDAR, judging whether the point filling mark of the point missing pixel position meets the preset requirement based on the point cloud data around the point missing pixel position. If so, it indicates that the point missing pixel position needs point cloud filling. At this time, the point filling distance and point filling reflectivity are calculated based on the point filling mark, and the point filling pixel position is filled using the calculation result. The point cloud filling method can locate the point filling pixel position that needs point cloud filling from the point missing pixel position and fill the distance and reflectivity of the point filling pixel position according to the point cloud data around the point filling pixel position, effectively improving the accuracy of point cloud filling, maintaining the edge features of the object being measured in the field of view, and not causing contour deformation of the object being measured due to point cloud filling, thereby improving the accuracy of LiDAR recognition.

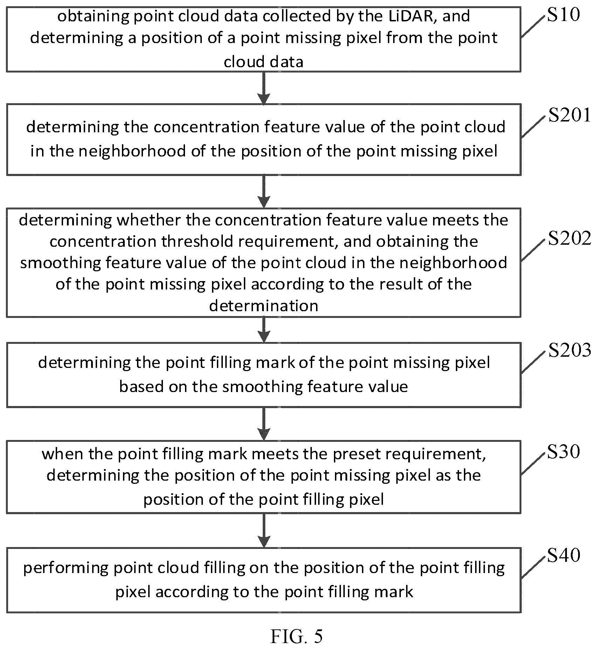

In an embodiment, as shown in FIG. 5, an embodiment of the point cloud filling method is proposed. Step S20 includes:

Step S201, determining the concentration feature value of the point cloud in the neighborhood of the position of the point missing pixel position.

The concentration feature value represents the degree of consistency of the detection data of the point cloud in the neighborhood of the position of the point missing pixel position. The larger the concentration feature value, the higher the degree of consistency of the detection data of the point cloud in the neighborhood of the position of the point missing pixel position, and vice versa. For example, the point cloud in the neighborhood of the position of the point missing pixel position includes 5 pixel points, each pixel point at least has corresponding distance and reflectivity; the concentration feature value represents the degree of consistency between the distances corresponding to these 5 pixel points, and/or the degree of consistency between the reflectivity values corresponding to these 5 pixel points.

Further, the determining the concentration feature value of the point cloud in the neighborhood of the position of the point missing pixel position includes: constructing a first transverse neighborhood with the point missing pixel position as the center, obtaining the point cloud in the first transverse neighborhood; determining the transverse concentration feature value according to the point cloud in the first transverse neighborhood; constructing a first longitudinal neighborhood with the point missing pixel position as the center, obtaining the point cloud in the first longitudinal neighborhood; and determining the longitudinal concentration feature value according to the point cloud in the first longitudinal neighborhood.

The concentration feature value corresponding to the point missing pixel position includes the transverse concentration feature value and the longitudinal concentration feature value, which need to be obtained respectively in two directions. Constructing neighborhood windows along two directions with the point missing pixel position as the center, respectively as the first transverse neighborhood and the first longitudinal neighborhood. The first transverse neighborhood refers to the neighborhood constructed with the point missing pixel position as the center in the first direction of the point cloud, using the first window length as the distance, and then determining the transverse concentration feature value according to the point cloud in the first transverse neighborhood. Correspondingly, the first longitudinal neighborhood refers to the neighborhood constructed with the point missing pixel position as the center in the second direction of the point cloud, using the second window length as the distance. Each pixel point in the point cloud detected by the LiDAR is usually represented by coordinates, usually with the LiDAR as the origin, horizontal right as the X-axis, vertical up as the Y-axis, and the direction facing the front of the LiDAR as the Z-axis. The first transverse neighborhood refers to the neighborhood constructed in the X-axis direction, and the first longitudinal neighborhood refers to the neighborhood constructed in the Y-axis direction. The first window length and the second window length can be the same or different, and can be determined according to the scanning method of the LiDAR or the situation of the object being measured. For example, for mechanical LiDAR that scans column by column, the first window length can be greater than the second window length. The point cloud in the first longitudinal neighborhood is obtained simultaneously, and the consistency of the detection data is high. To simplify the algorithm, the neighborhood window can be made smaller. For MEMS LiDAR that scans point by point in rows, the first window length can be equal to the second window length because the detection data in both directions is obtained point by point. For objects being measured, such as lamp posts, the first window length can be smaller than the second window length to match the shape of the object being measured. Opening the second longitudinal neighborhood larger can obtain more detection data corresponding to the lamp post, and the obtained longitudinal feature value has higher reliability.

The determining the transverse concentration feature value according to the point cloud in the first transverse neighborhood includes: obtaining a first distance median of distances of a plurality of pixel points contained in the point cloud in the first transverse neighborhood; counting the quantity of pixel points whose distances from the first distance median are less than a first threshold as the transverse concentration feature value; and the determining the longitudinal concentration feature value according to the point cloud in the first longitudinal neighborhood includes: obtaining a second distance median of distances of a plurality of pixel points contained in the point cloud in the first longitudinal neighborhood; counting the quantity of pixel points whose distances from the second distance median are less than a second threshold as the longitudinal concentration feature value.

The first distance median refers to the median of the distances of the plurality of pixel points contained in the point cloud in the first transverse neighborhood, and then counting the quantity of pixel points whose distances from the first distance median are less than the first threshold as the transverse concentration feature value; correspondingly, the second distance median refers to the median of the distances of the plurality of pixel points contained in the point cloud in the first longitudinal neighborhood, and then counting the quantity of pixel points whose distances from the second distance median are less than the second threshold as the longitudinal concentration feature value.

Step S202, determining whether the concentration feature value meets the concentration threshold requirement, and obtaining the smoothing feature value of the point cloud in the neighborhood of the position of the point missing pixel position according to the result of the determination.

Determining whether the concentration feature value meets the concentration threshold requirement essentially means determining whether the concentration feature value is greater than the concentration threshold; if so, obtaining the smoothing feature value of the point cloud in the neighborhood of the position of the point missing pixel position. In an embodiment, the concentration threshold can be calculated by the formula:

$$YU_{cd} = floor(L/2) + 1$$

where $YU_{cd}$ represents the concentration threshold, $L$ represents the window length, and the floor function rounds down. For example, if $L$ is 5, then $YU_{cd} = 3$.

The concentration feature value includes the transverse concentration feature value and the longitudinal concentration feature value. First, the transverse concentration feature value is judged, and step S202 includes: when the transverse concentration feature value is greater than the concentration threshold, it indicates that the concentration feature value meets the concentration threshold requirement, and the first smoothing feature value of the point cloud in the first transverse neighborhood is obtained. Then, the longitudinal concentration feature value is judged, when the longitudinal concentration feature value is greater than the concentration threshold, the second smoothing feature value of the point cloud in the first longitudinal neighborhood is obtained. When the transverse concentration feature value is less than or equal to the concentration threshold, it indicates that the concentration feature value does not meet the concentration threshold requirement, indicating poor consistency of the detection data in the first transverse neighborhood. If the first smoothing feature value is calculated, the confidence of the result is poor, and the first smoothing feature value is no longer calculated, and the judgment of the longitudinal concentration feature value is started. When the longitudinal concentration feature value is greater than the concentration threshold, the second smoothing feature value of the point cloud in the first longitudinal neighborhood is obtained.

After judging the transverse concentration feature value, the longitudinal concentration feature value is judged. When the longitudinal concentration feature value is greater than the concentration threshold, it indicates that the concentration feature value meets the concentration threshold requirement, and the second smoothing feature value of the point cloud in the first longitudinal neighborhood is obtained. When the longitudinal concentration feature value is less than or equal to the concentration threshold, it indicates that the concentration feature value does not meet the concentration threshold requirement, indicating poor consistency of the detection data in the first longitudinal neighborhood. If the second smoothing feature value is calculated, the confidence of the result is poor, and the second smoothing feature value is no longer calculated.

The neighborhood of the position of the point missing pixel position includes the first transverse neighborhood and the first longitudinal neighborhood, so the concentration feature value includes the transverse concentration feature value and the longitudinal concentration feature value. When the transverse concentration feature value is determined to be greater than the concentration threshold, the first smoothing feature value is calculated using the first pixel point set in the first transverse neighborhood. Correspondingly, when the longitudinal concentration feature value is determined to be greater than the concentration threshold, the second smoothing feature value is calculated using the second pixel point set in the first longitudinal neighborhood.

Optionally, the longitudinal concentration feature value can be judged first, and the steps are similar to the steps of judging the transverse concentration feature value first. When the longitudinal concentration feature value is greater than the concentration threshold, the second smoothing feature value of the point cloud in the first longitudinal neighborhood is obtained, and then the transverse concentration feature value is judged. When the longitudinal concentration feature value is less than or equal to the concentration threshold, the second smoothing feature value is no longer calculated, and the judgment of the transverse concentration feature value is started.

After judging the longitudinal concentration feature value, the transverse concentration feature value is judged.

When the transverse concentration feature value is greater than the concentration threshold, the first smoothing feature value of the point cloud in the first transverse neighborhood is obtained. When the transverse concentration feature value is less than or equal to the concentration threshold, the first smoothing feature value is no longer calculated.

The order of judging the transverse and longitudinal concentration feature values is related to the scanning type of the LiDAR that obtains the point cloud. For example, for mechanical LiDAR that scans column by column, the detection data in the first longitudinal neighborhood is more correlated, and the longitudinal concentration feature value can be judged first. For MEMS LiDAR that scans point by point in rows, the detection data in the first transverse neighborhood is more correlated, and the transverse concentration feature value can be judged first.

Further, the obtaining the first smoothing feature value of the point cloud in the first transverse neighborhood includes: obtaining a first pixel set in the point cloud in the first transverse neighborhood, each pixel in the first pixel set having a difference between its distance and the first distance median being less than the fifth threshold; calculating a first difference quotient using the distance of each pixel in the first pixel set, and using the first difference quotient as the first smoothing feature value.

Determining the first pixel set in the first transverse neighborhood whose distances from the first distance median are less than the fifth threshold, and then calculating the first difference quotient using the distances of each pixel in the first pixel set. In an embodiment:

$$Smoothcoef_1 = \frac{\sum\limits_{i=2}^{DensePointCnt_1} abs(d(ValidIdx(i)) - d(ValidIdx(i-1))}{DensePointCnt_1}$$

where $Smoothcoef_1$ represents the first difference quotient, $i$ represents the index of the pixel in the first pixel set, $DensePointCnt_1$ represents the number of pixels in the first pixel set, and $d(ValidIdx(i))$, $d(ValidIdx(i-1))$ represents the distance of the pixel.

To simplify the calculation, the fifth threshold can be equal to the first threshold. When calculating the transverse concentration feature value, the number of pixels in the first transverse neighborhood whose distances differ from the first distance median by less than the first threshold is counted. These pixels meeting the statistical requirements constitute the pixels of the first pixel set. Therefore, in the first transverse neighborhood, the more pixels whose distances are close to the first distance median, the more concentrated the detection data of the multiple pixels in the first transverse neighborhood is, and the higher the degree of consistency; meanwhile, when calculating the first smoothing feature value, these high-consistency data are also used, and data with large fluctuations are removed, thus improving the accuracy and reliability of the first smoothing feature value.

Further, the obtaining of the second smoothing feature value of the point cloud in the first longitudinal neighborhood includes: obtaining a second pixel set in the point cloud in the first longitudinal neighborhood, each pixel in the second pixel set having a difference between its distance and the second distance median being less than the sixth threshold; calculating a second difference quotient using the distance of each pixel in the second pixel set, and using the second difference quotient as the second smoothing feature value.

Determining the second pixel set in the first longitudinal neighborhood whose distances differ from the second distance median by less than the sixth threshold, and then calculating the second difference quotient using the distances of each pixel in the second pixel set. In an embodiment:

$$Smoothcoef_2 = \frac{\sum\limits_{j=2}^{DensePointCnt_2} abs(d(ValidIdx(j)) - d(ValidIdx(j-1))}{DensePointCnt_2}$$

where $Smoothcoef_1$ represents the second difference quotient, $j$ represents the index of the pixel in the second pixel set, $DensePointCnt_2$ represents the number of pixels in the second pixel set, and $d(ValidIdx(j))$, $d(ValidIdx(j-1))$ represents the distance of the pixel.

To simplify the calculation, the sixth threshold can be equal to the second threshold. When calculating the longitudinal concentration feature value, the number of pixels in the first longitudinal neighborhood whose distances differ from the second distance median by less than the second threshold is counted. These pixels meeting the statistical requirements constitute the second pixel set.

Step S203, determining the point filling mark of the point missing pixel position based on the smoothing feature value.

After obtaining the smoothing feature value, the point filling mark of the point missing pixel position is determined based on the comparison result between the smoothing feature value and the smoothing threshold. In an embodiment, when the first smoothing feature value is less than the smoothing threshold, the transverse point filling mark of the point missing pixel position is determined as the first mark; otherwise, the transverse point filling mark is the second mark. When the second smoothing feature value is less than the smoothing threshold, the longitudinal point filling mark of the point missing pixel position is determined as the first mark; otherwise, the longitudinal point filling mark is the second mark. The first mark and the second mark are different.

If only the first smoothing feature value is output and the second smoothing feature value is not, the longitudinal point filling mark of the point missing pixel position is determined as the second mark. When the first smoothing feature value is less than the smoothing threshold, the transverse point filling mark of the point missing pixel position is determined as the first mark. When the first smoothing feature value is greater than or equal to the smoothing threshold, the transverse point filling mark is determined as the second mark. If only the second smoothing feature value is output and the first smoothing feature value is not, the transverse point filling mark of the point missing pixel position is determined as the second mark. Additionally, when the second smoothing feature value is less than the smoothing threshold, the longitudinal point filling mark of the point missing pixel position is determined as the first mark. When the second smoothing feature value is greater than or equal to the smoothing threshold, the longitudinal point filling mark is determined as the second mark.

In an embodiment, by determining the concentration feature value of the point cloud in the neighborhood of the position of the point missing pixel position; determining whether the concentration feature value meets the concentration threshold requirement, obtaining the smoothing feature value of the point cloud in the neighborhood of the position of the point missing pixel position based on the result of the determination; and determining the point filling mark of the point missing pixel position based on the smoothing feature value. In this way, the detection data of the pixel points around the point missing pixel position is characterized. If the detection data consistency degree and the smoothing feature value of the point cloud in the neighborhood of the position of the point missing pixel position are high, it indicates a high possibility that the point missing pixel position is consistent with the detection data of the surrounding pixel points, thereby determining the point filling mark of the point missing pixel position to improve the necessity and accuracy of point cloud filling at the point missing pixel position.

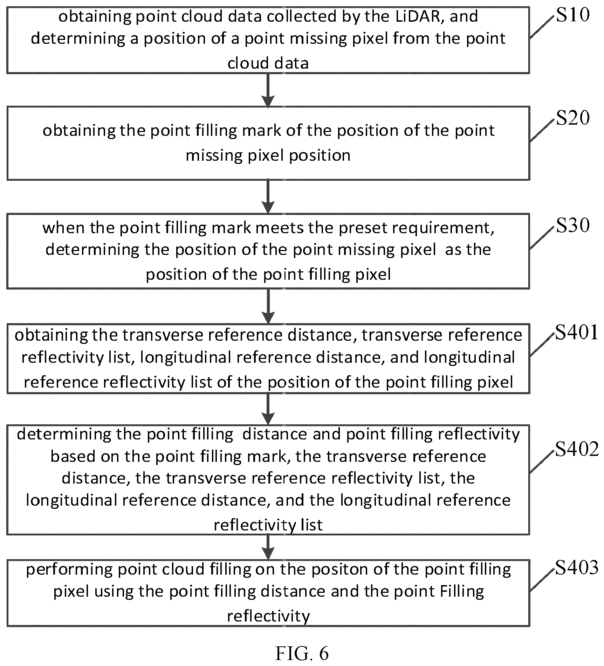

In an embodiment, as shown in FIG. 6, a point cloud filling method is proposed. Step S40 includes:
Step S401, obtaining the transverse reference distance, transverse reference reflectivity list, longitudinal reference distance, and longitudinal reference reflectivity list of the point filling pixel position.

Step S401 includes: constructing a second transverse neighborhood with the point filling pixel position as the center, obtaining the third pixel set in the point cloud in the second transverse neighborhood; wherein each pixel in the third pixel set has a distance difference from the third distance median that is less than the third threshold, and the third distance median is the median of all the pixel distances in the second transverse neighborhood; obtaining the transverse interpolation coefficient of each pixel in the third pixel set; determining the transverse reference distance based on the transverse interpolation coefficient and the distance data of each pixel in the third pixel set; determining the transverse reference reflectivity list based on the reflectivity data of two pixels adjacent to the point filling pixel position in the third pixel set; constructing a second longitudinal neighborhood with the point filling pixel position as the center, obtaining the fourth pixel set in the point cloud in the second longitudinal neighborhood; wherein each pixel in the fourth pixel set has a distance difference from the fourth distance median that is less than the fourth threshold, and the fourth distance median is the median of all the pixel distances in the second longitudinal neighborhood; obtaining the longitudinal interpolation coefficient of each pixel in the fourth pixel set; determining the longitudinal reference distance based on the longitudinal interpolation coefficient and the distance data of each pixel in the fourth pixel set; determining the longitudinal reference reflectivity list based on the reflectivity data of two pixels adjacent to the point filling pixel position in the fourth pixel set.

The second transverse neighborhood refers to the neighborhood constructed in the transverse direction with the point filling pixel position as the center and the third window length as the distance. After constructing the second transverse neighborhood, determining the pixels in the second transverse neighborhood whose distance differences from the third distance median are less than the third threshold, and constituting these pixels into the third pixel set; then obtaining the transverse interpolation coefficient of each pixel in the third pixel set, which can be determined using polynomial interpolation principles.

For example, for a distance set of length N *DistList* (e.g., the distance set of points $p_1, p_2, ..., p_N$), the unknown transverse interpolation coefficients *WeightList* (*WeightList* initialized as a zero vector of length N) can be determined as follows:

$$WeightList(i) = \frac{\Pi_{j=1}^{N} ProDiff(p_c, p_j)}{\Pi_{j=1, j \neq i}^{N} ProDiff(p_i, p_j)}$$

$$Fill = \sum_{i=1}^{N} WeightList(i) \cdot DistList(i)$$

where *ProDiff(p_i, p_j)* represents the projection difference in any direction between point $p_i$ and point $p_j$, and *ProDiff(p_c, p_j)* represents the projection difference in any direction between point $p_c$ and point $p_j$; to simplify the calculation, the projection selected for the above judgment condition is the column number of the two-dimensional distance matrix, in an embodiment:

$$ProDiff(p_i, p_j) = colNum(p_i) - colNum(p_j)$$

where *colNum(p_i)* represents the column number of point $p_i$ in the two-dimensional distance matrix, and *colNum(p_j)* represents the column number of point $p_j$ in the two-dimensional distance matrix. In other words, the transverse interpolation coefficients *WeightList* are solved using the above method. When the neighborhood length changes, the interpolation coefficients need to be recalculated.

To simplify the calculation, the second transverse neighborhood constructed with the point filling pixel position as the center can be the same as the first transverse neighborhood, and the third threshold can be equal to the fifth threshold. In this way, the distance of the pixels in the first pixel set is directly used for polynomial interpolation, to obtain the transverse interpolation coefficients. Similarly, the second longitudinal neighborhood constructed with the point filling pixel position as the center can be the same as the first longitudinal neighborhood, and the fourth threshold can be equal to the sixth threshold. In this way, the distance of the pixels in the second pixel set is directly used for polynomial interpolation to obtain the longitudinal interpolation coefficients.

The second transverse neighborhood constructed with the point filling pixel position as the center can be different from the first transverse neighborhood, and the third threshold can be different from the fifth threshold. At this time, the third threshold is used for the comparison of the distance differences between the pixel distances and the distance median, and the transverse interpolation coefficients are obtained by polynomial interpolation based on the distance data of each pixel in the third pixel set, instead of the data of the pixels in the first pixel set. Similarly, the second longitudinal neighborhood constructed with the point filling pixel position as the center can be different from the first longitudinal neighborhood, and the fourth threshold can be different from the sixth threshold. At this time, the fourth threshold is used for the comparison of the distance differences between the pixel distances and the distance median, and the longitudinal interpolation coefficients are obtained by polynomial interpolation based on the distance data of each pixel in the fourth pixel set.

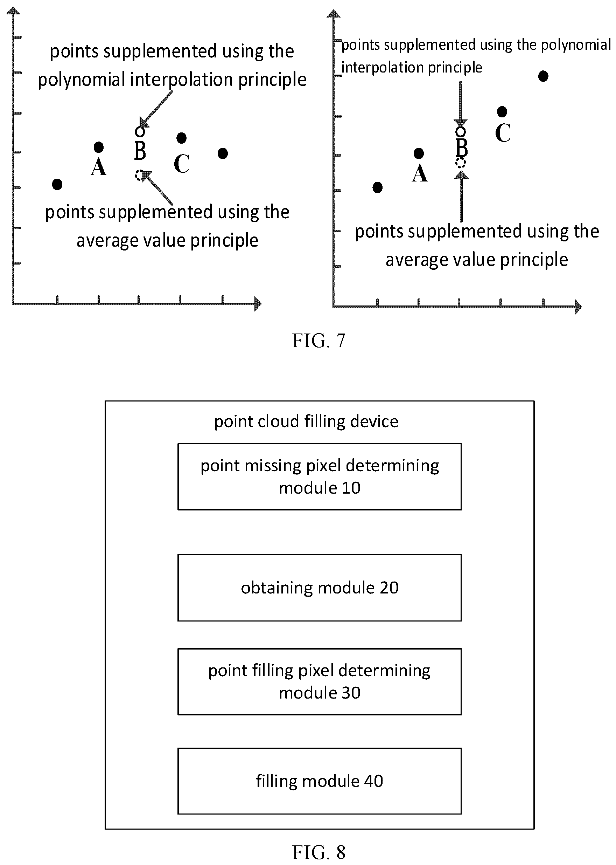

Referring to FIG. 7, FIG. 7 is an illustrative example of point cloud filling, explained using a $1 \times 5$ second transverse neighborhood. The left side shows a comparison of the results of different point cloud filling methods for an arch curve. The filling area is marked with a frame, with the points supplemented using the polynomial interpolation principle on the top and the points supplemented using the average value principle on the bottom. The right side shows a comparison of the results of different point cloud filling methods for a monotonic curve, with the points supplemented using the polynomial interpolation principle on the top and the points supplemented using the average value principle on the bottom. The comparison in the figure shows that the curve formed by the points supplemented using the polynomial interpolation principle is smoother and the surface is smoother. In addition, after determining the point filling pixel position, the nearest adjacent points to the point filling pixel position are further determined. For example, if the point filling pixel position is point B, the adjacent points are points A and C, and if the reflectivity values of points A and C are *a* and c respectively, the transverse reference reflectivity list is determined as {a, c}.

Explained using a second transverse neighborhood with a window length of 5, after obtaining the transverse interpolation coefficients of each pixel, the transverse reference distance is determined based on the distance data of each pixel in the third pixel set. The transverse reference reflectivity list is determined based on the reflectivity data of the two pixels adjacent to the point filling pixel position.

When the pixel numbers included in the third pixel set are 1, 2, 4, and 5, the transverse reference distance is calculated using the distance data of the pixels numbered 1, 2, 4, and 5, and the transverse reference reflectivity list is calculated using the reflectivity data of the pixels numbered 2 and 4. In an embodiment,

$$DistFill = -\frac{1}{6}Dist(1) + \frac{2}{3}Dist(2) + \frac{2}{3}Dist(4) - \frac{1}{6}Dist(5)$$

$$ReferRefList = [Ref(2), Ref(4)]_{;}$$

where *DistFill* represents the transverse reference distance, *Dist(1)* represents the distance data of the pixel numbered 1, *Dist(2)* represents the distance data of the pixel numbered 2, *Dist(4)* represents the distance data of the pixel numbered 4, *Dist(5)* represents the distance data of the pixel numbered 5, *ReferRefList* represents the transverse reference reflectivity list, *Ref(2)* represents the reflectivity data of the pixel numbered 2, and *Ref(4)* represents the reflectivity data of the pixel numbered 4.

When the pixel numbers included in the third pixel set are 1, 2, and 4, the transverse reference distance is calculated using the distance data of the pixels numbered 1, 2, and 4, and the transverse reference reflectivity list is calculated using the reflectivity data of the pixels numbered 2 and 4. In an embodiment,

$$DistFill = -\frac{1}{3}Dist(1) + Dist(2) + \frac{1}{3}Dist(4)$$

$$ReferRefList = \left[ Ref(2), Ref(4) \right];$$

where *DistFill* represents the transverse reference distance, *Dist(1)* represents the distance data of the pixel numbered 1, *Dist(2)* represents the distance data of the pixel numbered 2, *Dist(4)* represents the distance data of the pixel numbered 4, *ReferRefList* represents the transverse reference reflectivity list, *Ref(2)* represents the reflectivity data of the pixel numbered 2, and *Ref(4)* represents the reflectivity data of the pixel numbered 4.

When the pixel numbers included in the third pixel set are 1, 2, and 5, the transverse reference distance is calculated using the distance data of the pixels numbered 1, 2, and 5, and the transverse reference reflectivity list is calculated using the reflectivity data of the pixels numbered 2 and 5. In an embodiment,

$$DistFill = -\frac{1}{2}Dist(1) + \frac{4}{3}Dist(2) + \frac{1}{6}Dist(4)$$

$$ReferRefList = \left[ Ref(2), Ref(5) \right];$$

where *DistFill* represents the transverse reference distance, *Dist(1)* represents the distance data of the pixel numbered 1, *Dist(2)* represents the distance data of the pixel numbered 2, *Dist(5)* represents the distance data of the pixel numbered 5, *ReferRefList* represents the transverse reference reflectivity list, *Ref(2)* represents the reflectivity data of the pixel numbered 2, and *Ref(5)* represents the reflectivity data of the pixel numbered 5.

When the pixel numbers included in the third pixel set are 1, 4, and 5, the transverse reference distance is calculated using the distance data of the pixels numbered 1, 4, and 5, and the transverse reference reflectivity list is calculated using the reflectivity data of the pixels numbered 1 and 4. In an embodiment,

$$DistFill = \frac{1}{6}Dist(1) + \frac{4}{3}Dist(2) - \frac{1}{2}Dist(4)$$

$$ReferRefList = \left[ Ref(1), Ref(4) \right]$$

where *DistFill* represents the transverse reference distance, *Dist(1)* represents the distance data of the pixel numbered 1, *Dist(4)* represents the distance data of the pixel numbered 4, *Dist(5)* represents the distance data of the pixel numbered 5, *ReferRefList* represents the transverse reference reflectivity list, *Ref(1)* represents the reflectivity data of the pixel numbered 1, and *Ref(4)* represents the reflectivity data of the pixel numbered 4.

When the pixel numbers included in the third pixel set are 2, 4, and 5, the transverse reference distance is calculated using the distance data of the pixels numbered 2, 4, and 5, and the transverse reference reflectivity list is calculated using the reflectivity data of the pixels numbered 2 and 5. In an embodiment,

$$DistFill = \frac{1}{3}Dist(2) + Dist(4) - \frac{1}{3}Dist(5)$$

$$ReferRefList = \left[ Ref(2), Ref(5) \right];$$

where *DistFill* represents the transverse reference distance, *Dist(2)* represents the distance data of the pixel numbered 2, *Dist(4)* represents the distance data of the pixel numbered 4, *Dist(5)* represents the distance data of the pixel numbered 5, *ReferRefList* represents the transverse reference reflectivity list, *Ref(2)* represents the reflectivity data of the pixel numbered 2, an *Ref(4)* represents the reflectivity data of the pixel numbered 4.

The calculation method of the longitudinal reference distance and the longitudinal reference reflectivity list is similar to the calculation process of the transverse reference distance and the transverse reference reflectivity list described above. In an embodiment, the longitudinal interpolation coefficients of each pixel in the fourth pixel set are obtained based on the polynomial interpolation principle, and then the longitudinal reference distance and the longitudinal reference reflectivity list are calculated using the above formulas in combination with the distance data of each pixel and the reflectivity data of the two pixels adjacent to the point filling pixel position.

The parameters used to calculate the reference distance in this embodiment are the distance data of each pixel and the interpolation coefficients obtained through polynomial interpolation. This considers the influence of the distance data of other pixels in the second neighborhood on the point filling pixel position (the interpolation coefficients), making the calculated reference distance closer to the distance of the missing point. Additionally, the parameters used to determine the reference reflectivity list in this embodiment are the reflectivity data of the two pixels adjacent to the point filling pixel position in the second transverse neighborhood of the position of the point cloud. The missing data may be closely related to the adjacent objects. Therefore, using the reflectivity data of the two pixels adjacent to the point filling pixel position to determine the reference reflectivity list is more accurate.

Step S402, determining the point filling distance and point filling reflectivity based on the point filling mark, the transverse reference distance, the transverse reference reflectivity list, the longitudinal reference distance, and the longitudinal reference reflectivity list.

Further, step S402 includes: when the transverse point filling mark is the first mark and the longitudinal point filling mark is the first mark, if the difference between the transverse reference distance and the longitudinal reference distance is less than the distance threshold, determining the transverse reference distance as the point filling distance; when the transverse point filling mark is the first mark and the longitudinal point filling mark is the second mark, determining the transverse reference distance as the point filling distance; when the transverse point filling mark is the second mark and the longitudinal point filling mark is the first mark, determining the longitudinal reference distance as the point filling distance.

After determining the transverse and longitudinal point filling marks of the point filling pixel position, if either the transverse or longitudinal point filling mark is the first mark, determine the point filling distance and perform point cloud filling on the point filling pixel position using the point filling distance. When the transverse point filling mark is the first mark and the longitudinal point filling mark is the first mark, it indicates that the data consistency and smoothness in the second transverse neighborhood are good, and the confidence level of the transverse reference distance obtained by polynomial fitting is high. Similarly, the confidence level of the longitudinal reference distance obtained by fitting is high. In this case, the transverse reference distance and the longitudinal reference distance are compared. If the difference is less than the distance threshold, it indicates that the transverse and longitudinal reference distances are similar, and the transverse reference distance is determined as the point filling distance. For MEMS LiDAR, which scans point-by-point in rows, the correlation of detection data in the second transverse neighborhood is higher, so the transverse reference distance can be determined as the point filling distance. In an embodiment, for mechanical LiDAR, which scans column-by-column, the correlation of detection data in the second longitudinal neighborhood is higher, so the longitudinal reference distance can be determined as the point filling distance. Alternatively, the average of the transverse and longitudinal reference distances can be determined as the point filling distance.

When the transverse point filling mark is the first mark and the longitudinal point filling mark is the second mark, the transverse reference distance is determined as the point filling distance. The confidence level of the transverse reference distance is higher. The second longitudinal neighborhood may not have a suitable fourth pixel set, making it hard to calculate the longitudinal reference distance, or the calculated longitudinal reference distance may have a lower confidence level. Therefore, the transverse reference distance is determined as the point filling distance.

When the transverse point filling mark is the second mark and the longitudinal point filling mark is the first mark, the longitudinal reference distance is determined as the point filling distance. Similarly, the confidence level of the longitudinal reference distance is higher. The second transverse neighborhood may not have a suitable third pixel set, making it hard to calculate the transverse reference distance, or the calculated transverse reference distance may have a lower confidence level. Therefore, the longitudinal reference distance is determined as the point filling distance.

When the transverse point filling mark is the first mark and the longitudinal point filling mark is the first mark: if the difference in reflectivity in the transverse reference reflectivity list is less than the reflectivity threshold, the average reflectivity in the transverse reference reflectivity list is determined as the point filling reflectivity; if the difference in reflectivity in the transverse reference reflectivity list is greater than or equal to the reflectivity threshold, and the difference in reflectivity in the longitudinal reference reflectivity list is less than the reflectivity threshold, the average reflectivity in the longitudinal reference reflectivity list is determined as the point filling reflectivity; otherwise, the minimum reflectivity in the transverse reference reflectivity list is determined as the point filling reflectivity. When the transverse point filling mark is the first mark and the longitudinal point filling mark is the second mark, if the difference in reflectivity in the transverse reference reflectivity list is less than the reflectivity threshold, the average reflectivity in the transverse reference reflectivity list is determined as the point filling reflectivity; if the difference in reflectivity in the transverse reference reflectivity list is greater than or equal to the reflectivity threshold, the minimum reflectivity in the transverse reference reflectivity list is determined as the point filling reflectivity. When the transverse point filling mark is the second mark and the longitudinal point filling mark is the first mark: if the difference in reflectivity in the longitudinal reference reflectivity list is less than the reflectivity threshold, the average reflectivity in the longitudinal reference reflectivity list is determined as the point filling reflectivity; if the difference in reflectivity in the longitudinal reference reflectivity list is greater than or equal to the reflectivity threshold, the minimum reflectivity in the longitudinal reference reflectivity list is determined as the point filling reflectivity.

After determining the transverse and longitudinal reference reflectivity lists, if either the transverse or longitudinal point filling mark is the first mark, it is necessary to determine the point filling reflectivity and perform point cloud filling on the point filling pixel position using the point filling reflectivity. When the transverse point filling mark is the first mark and the longitudinal point filling mark is the first mark, it indicates that the confidence levels of the obtained transverse and longitudinal reference reflectivity lists are both high. In this case, if the difference in reflectivity in the transverse reference reflectivity list is less than the reflectivity threshold, it indicates that the reflectivity values in the transverse reference reflectivity list are similar, and the average reflectivity in the transverse reference reflectivity list is determined as the point filling reflectivity. Additionally, if the difference in reflectivity in the transverse reference reflectivity list is greater than or equal to the reflectivity threshold and the difference in reflectivity in the longitudinal reference reflectivity list is less than the reflectivity threshold, it indicates that the reflectivity difference in the transverse reference reflectivity list is relatively large, while the reflectivity difference in the longitudinal reference reflectivity list is relatively small, and the average reflectivity in the longitudinal reference reflectivity list is determined as the point filling reflectivity. If the difference in reflectivity in both the transverse and longitudinal reference reflectivity lists is greater than the reflectivity threshold, it indicates that the reflectivity differences in both lists are relatively large, and the minimum reflectivity in the transverse reference reflectivity list is determined as the point filling reflectivity by default.

For MEMS LiDAR, which scans point-by-point in rows, the correlation of detection data in the second transverse neighborhood is higher, so the minimum reflectivity in the transverse reference reflectivity list can be determined as the point filling reflectivity. For mechanical LiDAR, which scans column-by-column, the correlation of detection data in the second longitudinal neighborhood is higher, so the minimum reflectivity in the longitudinal reference reflectivity list can be determined as the point filling reflectivity. Alternatively, the average of the minimum reflectivity in the transverse and longitudinal reference reflectivity lists can be determined as the point filling reflectivity.

When the transverse point filling mark is the first mark and the longitudinal point filling mark is the second mark, if the difference in reflectivity in the transverse reference reflectivity list is less than the reflectivity threshold, the average reflectivity in the transverse reference reflectivity list is determined as the point filling reflectivity. The confidence level of the transverse reference reflectivity list is higher, and the second longitudinal neighborhood may not have a suitable fourth pixel set, making it impossible to obtain the longitudinal reference reflectivity list, or the obtained longitudinal reference reflectivity list may have a lower confidence level. In this case, the average reflectivity in the transverse reference reflectivity list is determined as the point filling reflectivity. If the difference in reflectivity in the transverse reference reflectivity list is greater than or equal to the reflectivity threshold, it indicates that the reflectivity difference in the transverse reference reflectivity list is relatively large, and the minimum reflectivity in the transverse reference reflectivity list is determined by default.

When the transverse point filling mark is the second mark and the longitudinal point filling mark is the first mark, if the difference in reflectivity in the longitudinal reference reflectivity list is less than the reflectivity threshold, the average reflectivity in the longitudinal reference reflectivity list is determined as the point filling reflectivity. Similarly, the confidence level of the longitudinal reference reflectivity list is higher, and the second transverse neighborhood may not have a suitable third pixel set, making it hard to obtain the transverse reference reflectivity list, or the obtained transverse reference reflectivity list may have a lower confidence level. In this case, the average reflectivity in the longitudinal reference reflectivity list is determined as the point filling reflectivity. Additionally, if the difference in reflectivity in the longitudinal reference reflectivity list is greater than or equal to the reflectivity threshold, it indicates that the reflectivity difference in the transverse reference reflectivity list is relatively large, and the minimum reflectivity in the longitudinal reference reflectivity list is determined by default.

Step S403, performing point cloud filling on the point filling pixel position using the point filling distance and the point filling reflectivity.

After obtaining the point filling reference distance and point filling reflectivity, point cloud filling is performed on the point filling pixel position using the point filling distance and point filling reflectivity, filling the detection data of the point missing pixel position to reduce holes in the point cloud data, thereby ensuring the integrity and continuity of the point cloud data.

In this embodiment, the point filling distance and point filling reflectivity are determined by obtaining the transverse reference distance, transverse reference reflectivity list, longitudinal reference distance, and longitudinal reference reflectivity list of the point filling pixel position; determining the point filling distance and point filling reflectivity based on the point filling mark, the transverse reference distance, the transverse reference reflectivity list, the longitudinal reference distance, and the longitudinal reference reflectivity list; and performing point cloud filling on the point filling pixel position using the point filling distance and point filling reflectivity. In this way, after determining the point filling mark of the point filling pixel position, the point filling distance and point filling reflectivity are comprehensively determined based on the judgment result of the point filling mark, the obtained point filling mark, the transverse reference distance, the transverse reference reflectivity list, the longitudinal reference distance, and the longitudinal reference reflectivity list. The point filling distance and point filling reflectivity are used to perform point cloud filling on the point filling pixel position, effectively improving the accuracy of point cloud filling.

An embodiment of the present application also provides a storage medium storing a point cloud filling program, which implements the steps of the point cloud filling method embodiments when executed by a processor.

Referring to FIG. 8, an embodiment of the present application provides a point cloud filling device, which includes: a point missing pixel determining module 10, used to obtain the point cloud data collected by the LiDAR and determine the position of the point missing pixel from the point cloud data; an obtaining module 20, used to obtain the point filling mark of the point missing pixel position; a point filling pixel determining module 30, used to determine the point missing pixel position as the point filling pixel position when the point filling mark meets the preset requirement; a filling module 40, used to perform point cloud filling on the point filling pixel position based on the point filling mark.

In this embodiment, the point cloud filling device determines the point missing pixel position from the point cloud data collected by the LiDAR; obtains the point filling mark of the point missing pixel position; determines the point missing pixel position as the point filling pixel position when the point filling mark meets the preset requirement; and performs point cloud filling on the point filling pixel position based on the point filling mark. In this way, after determining the point missing pixel position from the point cloud data collected by the LiDAR, the point cloud filling device judges whether the point filling mark of the point missing pixel position meets the preset requirement based on the point cloud data around the point missing pixel position. If so, it indicates that the point missing pixel position is a point filling pixel position that needs point cloud filling. At this time, the point filling distance and point filling reflectivity are calculated based on the point filling mark, and point cloud filling is performed on the point filling pixel position using the calculation results. The point cloud filling method can locate the point filling pixel position that needs point cloud filling from the point missing pixel position and fill the distance and reflectivity of the point filling pixel position based on the point cloud data around the point filling pixel position, effectively improving the accuracy of point cloud filling, maintaining the edge features of the object being measured in the field of view, and not causing contour deformation of the object being measured due to point cloud filling, thereby improving the accuracy of LiDAR recognition.

The technical details not fully described in this embodiment can be referred to in embodiment of the point cloud filling method embodiments.

In an embodiment, the obtaining module 20 is used to determine the concentration feature value of the point cloud in the neighborhood of the position of the point missing pixel position; judge whether the concentration feature value meets the concentration threshold requirement, and obtain the smoothing feature value of the point cloud in the neighborhood of the position of the point missing pixel position based on the judgment result; determine the point filling mark of the point missing pixel position based on the smoothing feature value.

In an embodiment, the obtaining module 20 is used to construct a first transverse neighborhood with the point missing pixel position as the center, obtain the point cloud in the first transverse neighborhood; determine the transverse concentration feature value based on the point cloud in the first transverse neighborhood; construct a first longitudinal neighborhood with the point missing pixel position as the center, obtain the point cloud in the first longitudinal neighborhood; and determine the longitudinal concentration feature value based on the point cloud in the first longitudinal neighborhood.

In an embodiment, the obtaining module 20 is used to obtain the first distance median of the distances of multiple pixel points in the point cloud in the first transverse neighborhood; count the number of pixel points whose distance differences from the first distance median are less than the first threshold, as the transverse concentration feature value; and determine the longitudinal concentration feature value based on the point cloud in the first longitudinal neighborhood, including: obtaining the second distance median of the distances of multiple pixel points in the point cloud in the first longitudinal neighborhood; and counting the number of pixel points whose distance differences from the second distance median are less than the second threshold, as the longitudinal concentration feature value.

In an embodiment, the obtaining module 20 is used to obtain the first smoothing feature value of the point cloud in the first transverse neighborhood when the transverse concentration feature value is greater than the concentration threshold; and obtain the second smoothing feature value of the point cloud in the first longitudinal neighborhood when the longitudinal concentration feature value is greater than the concentration threshold.

In an embodiment, the obtaining module 20 is used to obtain the second smoothing feature value of the point cloud in the first longitudinal neighborhood when the transverse concentration feature value is less than or equal to the concentration threshold.

In an embodiment, the obtaining module 20 is used to obtain the first pixel set in the point cloud in the first transverse neighborhood, each pixel in the first pixel set having a distance difference from the first distance median that is less than the fifth threshold; calculate the first difference quotient using the distance of each pixel in the first pixel set, and use the first difference quotient as the first smoothing feature value.

In an embodiment, the obtaining module 20 is used to obtain the second pixel set in the point cloud in the first longitudinal neighborhood, each pixel in the second pixel set having a distance difference from the second distance median that is less than the sixth threshold; calculate the second difference quotient using the distance of each pixel in the second pixel set, and use the second difference quotient as the second smoothing feature value.

In an embodiment, the filling module 40 is used to obtain the transverse reference distance, transverse reference reflectivity list, longitudinal reference distance, and longitudinal reference reflectivity list of the point filling pixel position; determine the point filling distance and point filling reflectivity based on the point filling mark, the transverse reference distance, the transverse reference reflectivity list, the longitudinal reference distance, and the longitudinal reference reflectivity list; and perform point cloud filling on the point filling pixel position using the point filling distance and point filling reflectivity.

In an embodiment, the filling module 40 is used to determine the transverse reference distance as the point filling distance when the transverse point filling mark is the first mark and the longitudinal point filling mark is the first mark, and the difference between the transverse reference distance and the longitudinal reference distance is less than the distance threshold; determine the transverse reference distance as the point filling distance when the transverse point filling mark is the first mark and the longitudinal point filling mark is the second mark; and determine the longitudinal reference distance as the point filling distance when the transverse point filling mark is the second mark and the longitudinal point filling mark is the first mark.

In an embodiment, the filling module 40 is used to determine the average reflectivity in the transverse reference reflectivity list as the point filling reflectivity when the transverse point filling mark is the first mark and the longitudinal point filling mark is the first mark, and the difference in reflectivity in the transverse reference reflectivity list is less than the reflectivity threshold; determine the average reflectivity in the longitudinal reference reflectivity list as the point filling reflectivity when the difference in reflectivity in the transverse reference reflectivity list is greater than or equal to the reflectivity threshold, and the difference in reflectivity in the longitudinal reference reflectivity list is less than the reflectivity threshold; otherwise, determine the minimum reflectivity in the transverse reference reflectivity list as the point filling reflectivity. When the transverse point filling mark is the first mark and the longitudinal point filling mark is the second mark, determine the average reflectivity in the transverse reference reflectivity list as the point filling reflectivity when the difference in reflectivity in the transverse reference reflectivity list is less than the reflectivity threshold; determine the minimum reflectivity in the transverse reference reflectivity list as the point filling reflectivity when the difference in reflectivity in the transverse reference reflectivity list is greater than or equal to the reflectivity threshold. When the transverse point filling mark is the second mark and the longitudinal point filling mark is the first mark, determine the average reflectivity in the longitudinal reference reflectivity list as the point filling reflectivity when the difference in reflectivity in the longitudinal reference reflectivity list is less than the reflectivity threshold; determine the minimum reflectivity in the longitudinal reference reflectivity list as the point filling reflectivity when the difference in reflectivity in the longitudinal reference reflectivity list is greater than or equal to the reflectivity threshold.

In an embodiment, the filling module 40 is used to construct a second transverse neighborhood with the point filling pixel position as the center, obtain the third pixel set in the point cloud in the second transverse neighborhood, wherein each pixel in the third pixel set has a distance difference from the third distance median that is less than the third threshold, and the third distance median is the median of all the pixel distances in the second transverse neighborhood; obtain the transverse interpolation coefficient of each pixel in the third pixel set; determine the transverse reference distance based on the transverse interpolation coefficient and the distance data of each pixel in the third pixel set; determine the transverse reference reflectivity list based on the reflectivity data of two pixels adjacent to the point filling pixel position in the third pixel set; construct a second longitudinal neighborhood with the point filling pixel position as the center, obtain the fourth pixel set in the point cloud in the second longitudinal neighborhood, wherein each pixel in the fourth pixel set has a distance difference from the fourth distance median that is less than the fourth threshold, and the fourth distance median is the median of all the pixel distances in the second longitudinal neighborhood; obtain the longitudinal interpolation coefficient of each pixel in the fourth pixel set; determine the longitudinal reference distance based on the longitudinal interpolation coefficient and the distance data of each pixel in the fourth pixel set; determine the longitudinal reference reflectivity list based on the reflectivity data of two pixels adjacent to the point filling pixel position in the fourth pixel set.

The terms "include," "comprise," or any other variations are intended to cover non-exclusive inclusion, such that a process, method, item, or system that includes a series of elements not only includes those elements but also includes other elements not specifically listed, or includes inherent elements of such process, method, item, or system. Without further limitation, an element defined by the statement "including a..." does not exclude the presence of additional identical elements in the process, method, item, or system that includes the element.

**EP 4 517 655 B1**

The sequence numbers of the embodiments are only for illustration and do not represent the advantages or disadvantages of the embodiments.

The method of the above embodiments can be implemented using software plus necessary general hardware platforms, and of course, it can be implemented using hardware. The technical solution can be in the form of a software product, which is stored in a storage medium (such as a ROM/RAM, magnetic disk, optical disk) and includes several instructions to enable a terminal device (which can be a mobile phone, computer, integrated platform workstation, or network device, etc.) to perform the method embodiments.

**Claims**

1. A point cloud filling method, comprising:

    obtaining point cloud data collected by a LiDAR;
    determining a position of a point missing pixel from the point cloud data, wherein the position of the point missing pixel refers to the pixel position that lacks detection data;
    determining a concentration feature value of a point cloud in a neighborhood of the position of the point missing pixel, wherein the concentration feature value represents the degree of consistency of the detection data of the point cloud in the neighborhood of the position of the point missing pixel position, and wherein the determining comprises:

      - constructing a first transverse neighborhood with the position of the point missing pixel as a center;
      - obtaining a point cloud in the first transverse neighborhood;
      - determining a transverse concentration feature value according to the point cloud in the first transverse neighborhood;
      - constructing a first longitudinal neighborhood with the position of the point missing pixel as a center;
      - obtaining a point cloud in the first longitudinal neighborhood; and
      - determining a longitudinal concentration feature value according to the point cloud in the first longitudinal neighborhood;

    determining whether the concentration feature value meets a concentration threshold requirement, and obtaining a smoothing feature value of the point cloud in the neighborhood of the position of the point missing pixel according to a result of the determination, wherein the smoothing feature value represents the degree of distance smoothness of the point cloud in the neighborhood constructed with the point missing pixel position as the center;
    determining a point filling mark of the position of the point missing pixel according to the smoothing feature value;
    when the point filling mark meets a preset requirement, determining the position of the point missing pixel as a position of a point filling pixel; and
    performing point cloud filling on the position of the point filling pixel according to the point filling mark.

2. The point cloud filling method according to claim 1,
    wherein determining the transverse concentration feature value according to the point cloud in the first transverse neighborhood comprises:

    obtaining a first distance median of distances of a plurality of pixels contained in the point cloud in the first transverse neighborhood; and
    counting a quantity of pixels of the plurality of pixels, a difference between the distances of the plurality of pixels and the first distance median of distances of the plurality of pixels being less than a first threshold, as the transverse concentration feature value; and
    wherein determining the longitudinal concentration feature value according to the point cloud in the first longitudinal neighborhood comprises:
    obtaining a second distance median of distances of a plurality of pixels contained in the point cloud in the first longitudinal neighborhood; and
    counting a quantity of pixels of the plurality of pixels, a difference between the distances of the plurality of pixels and the second distance median of distances of the plurality of pixels being less than a second threshold, as the longitudinal concentration feature value.

3. The point cloud filling method according to claim 2, wherein determining whether the concentration feature value meets the concentration threshold requirement, and obtaining the smoothing feature value of the point cloud in the neighborhood of the position of the point missing pixel according to a result of the determination comprises:

when the transverse concentration feature value is greater than the concentration threshold, obtaining a first smoothing feature value of the point cloud in the first transverse neighborhood; and
when the longitudinal concentration feature value is greater than the concentration threshold, obtaining a second smoothing feature value of the point cloud in the first longitudinal neighborhood.

4. The point cloud filling method according to claim 3, wherein determining whether the concentration feature value meets the concentration threshold requirement, and obtaining the smoothing feature value of the point cloud in the neighborhood of the position of the point missing pixel according to a result of the determination comprises:

when the transverse concentration feature value is less than or equal to the concentration threshold, performing the step of obtaining the second smoothing feature value of the point cloud in the first longitudinal neighborhood, when the longitudinal concentration feature value is greater than the concentration threshold.

5. The point cloud filling method according to claim 3, wherein obtaining the first smoothing feature value of the point cloud in the first transverse neighborhood comprises:

obtaining a first pixel set in the point cloud in the first transverse neighborhood, each pixel in the first pixel set having a difference between a distance of the pixel and the first distance median of distances of the plurality of pixels being less than a fifth threshold; and
calculating a first difference quotient using the distance of each pixel in the first pixel set, and using the first difference quotient as the first smoothing feature value; wherein the first difference quotient is calculated as:

$$Smoothcoef_1 = \frac{\sum_{i=2}^{DensePointCnt_1} abs(d(ValidIdx(i)) - d(ValidIdx(i-1))}{DensePointCnt_1}$$

where $Smoothcoef_1$ represents the first difference quotient, $i$ represents an index of the pixel in the first pixel set, $DensePointCnt_1$ represents a number of pixels in the first pixel set, and $d(ValidIdx(i)), d(ValidIdx(i-1))$ represents the distance of the pixel; or
wherein obtaining the second smoothing feature value of the point cloud in the first longitudinal neighborhood comprises:

obtaining a second pixel set in the point cloud in the first longitudinal neighborhood, each pixel in the second pixel set having a difference between a distance of the pixel and the second distance median of distances of the plurality of pixels being less than a sixth threshold; and
calculating a second difference quotient using the distance of each pixel in the second pixel set, and using the second difference quotient as the second smoothing feature value; wherein the second difference quotient is calculated as:

$$Smoothcoef_2 = \frac{\sum_{j=2}^{DensePointCnt_2} abs(d(ValidIdx(j)) - d(ValidIdx(j-1))}{DensePointCnt_2}$$

where $Smoothcoef_1$ represents the second difference quotient, $j$ represents an index of the pixel in the second pixel set, $DensePointCnt_2$ represents a number of pixels in the second pixel set, and $d(ValidIdx(j)), d(ValidIdx(j-1))$ represents the distance of the pixel.

6. The point cloud filling method according to claim 3, wherein determining the point filling mark of the position of the point missing pixel according to the smoothing feature value comprises:

when the first smoothing feature value is less than a smoothing threshold, determining that a transverse point filling mark of the position of the point missing pixel is a first mark; otherwise, the transverse point filling mark is a second mark, and the first mark is different from the second mark; and

when the second smoothing feature value is less than the smoothing threshold, determining that a longitudinal point filling mark of the position of the point missing pixel is the first mark; otherwise, the longitudinal point filling mark is the second mark.

7. The point cloud filling method according to claim 6, wherein when the point filling mark meets a preset requirement, determining the position of the point missing pixel as the position of the point filling pixel comprises:
when the transverse point filling mark is the first mark or the longitudinal point filling mark is the first mark, determining the position of the point missing pixel as the position of the point filling pixel.

8. The point cloud filling method according to claim 6, wherein performing point cloud filling on the position of the point filling pixel according to the point filling mark comprises:

   obtaining a transverse reference distance, a transverse reference reflectivity list, a longitudinal reference distance and a longitudinal reference reflectivity list of the position of the point filling pixel;
   determining a point filling distance and a point filling reflectivity according to the point filling mark, the transverse reference distance, the transverse reference reflectivity list, the longitudinal reference distance and the longitudinal reference reflectivity list; and
   performing point cloud filling on the position of the point filling pixel according to the point filling distance and the point filling reflectivity.

9. The point cloud filling method according to claim 8, wherein determining the point filling distance according to the point filling mark, the transverse reference distance, the transverse reference reflectivity list, the longitudinal reference distance and the longitudinal reference reflectivity list comprises:

   when the transverse point filling mark is the first mark and the longitudinal point filling mark is the first mark, a difference between the transverse reference distance and the longitudinal reference distance is less than a distance threshold, determining that the transverse reference distance is the point filling distance; or
   when the transverse point filling mark is the first mark and the longitudinal point filling mark is the second mark, determining that the transverse reference distance is the point filling distance; or
   when the transverse point filling mark is the second mark and the longitudinal point filling mark is the first mark, determining that the longitudinal reference distance is the point filling distance.

10. The point cloud filling method according to claim 8, wherein determining the point filling reflectivity according to the point filling mark, the transverse reference distance, the transverse reference reflectivity list, the longitudinal reference distance and the longitudinal reference reflectivity list comprises:
when the transverse point filling mark is the first mark and the longitudinal point filling mark is the first mark:

   a difference between reflectivity of the transverse reference reflectivity list is less than a reflectivity threshold, and determining that an average reflectivity of the transverse reference reflectivity list is the point filling reflectivity; or
   a difference between reflectivity of the transverse reference reflectivity list is greater than or equal to the reflectivity threshold, a difference between reflectivity of the longitudinal reference reflectivity list is less than the reflectivity threshold, determining that an average reflectivity of the longitudinal reference reflectivity list is the point filling reflectivity; or
   determining that a minimum reflectivity of the transverse reference reflectivity list is the point filling reflectivity; or
   when the transverse point filling mark is the first mark and the longitudinal point filling mark is the second mark:

   a difference between reflectivity of the transverse reference reflectivity list is less than the reflectivity threshold, determining that an average reflectivity of the transverse reference reflectivity list is the point filling reflectivity; or
   a difference between reflectivity of the transverse reference reflectivity list is greater than or equal to the reflectivity threshold, determining that a minimum reflectivity of the transverse reference reflectivity list is the point filling reflectivity; or
   when the transverse point filling mark is the second mark and the longitudinal point filling mark is the first mark:

   a difference between reflectivity of the longitudinal reference reflectivity list is less than the reflectivity threshold, determining that an average reflectivity of the longitudinal reference reflectivity list is the point filling reflectivity; or

a difference between reflectivity of the longitudinal reference reflectivity list is greater than or equal to the reflectivity threshold, determining that a minimum reflectivity of the longitudinal reference reflectivity list is the point filling reflectivity.

11. The point cloud filling method according to claim 8, wherein the obtaining the transverse reference distance, the transverse reference reflectivity list, the longitudinal reference distance and the longitudinal reference reflectivity list of the point filling pixel comprises:

constructing a second transverse neighborhood with the point filling pixel as a center, and obtaining a third pixel set in the point cloud in the second transverse neighborhood, each pixel in the third pixel set having a difference between a distance of the pixel and a third distance median of distances of the plurality of pixels being less than a third threshold, the third distance median of distances being a median of distances of all the pixels in the point cloud in the second transverse neighborhood;

obtaining a transverse interpolation coefficient of each pixel in the third pixel set;

determining the transverse reference distance according to the transverse interpolation coefficient of each pixel in the third pixel set and distance data of each pixel;

determining the transverse reference reflectivity list according to reflectivity data of two pixels adjacent to the point filling pixel in the third pixel set;

constructing a second longitudinal neighborhood with the point filling pixel as a center, and obtaining a fourth pixel set in the point cloud in the second longitudinal neighborhood, each pixel in the fourth pixel set having a difference between a distance of the pixel and a fourth distance median of distances of the plurality of pixels being less than a fourth threshold, the fourth distance median of distances being a median of distances of all the pixels in the point cloud in the second longitudinal neighborhood;

obtaining a longitudinal interpolation coefficient of each pixel in the fourth pixel set;

determining the longitudinal reference distance according to the longitudinal interpolation coefficient of each pixel in the fourth pixel set and distance data of each pixel; and

determining the longitudinal reference reflectivity list according to reflectivity data of two pixels adjacent to the point filling pixel in the fourth pixel set.

12. A point cloud filling device, comprising

a point missing pixel determining module, configured to obtain point cloud data collected by a LiDAR, and determine a position of a point missing pixel from the point cloud data, wherein the position of the point missing pixel refers to the pixel position that lacks detection data;

an obtaining module, configured to obtain a point filling mark of the position of the point missing pixel; wherein the obtaining comprises: determining a concentration feature value of a point cloud in a neighborhood of the position of the point missing pixel, wherein the concentration feature value represents the degree of consistency of the detection data of the point cloud in the neighborhood of the position of the point missing pixel position, and wherein the determining comprises:

- constructing a first transverse neighborhood with the position of the point missing pixel as a center;
- obtaining a point cloud in the first transverse neighborhood;
- determining a transverse concentration feature value according to the point cloud in the first transverse neighborhood;
- constructing a first longitudinal neighborhood with the position of the point missing pixel as a center;
- obtaining a point cloud in the first longitudinal neighborhood; and
- determining a longitudinal concentration feature value according to the point cloud in the first longitudinal neighborhood;

determining whether the concentration feature value meets a concentration threshold requirement, and obtaining a smoothing feature value of the point cloud in the neighborhood of the position of the point missing pixel according to a result of the determination, wherein the smoothing feature value represents the degree of distance smoothness of the point cloud in the neighborhood constructed with the point missing pixel position as the center;

determining the point filling mark of the position of the point missing pixel according to the smoothing feature value;

a point filling pixel determining module, configured to determine the position of the point missing pixel as a position of a point filling pixel when the point filling mark meets a preset requirement; and

a filling module, configured to perform point cloud filling on the position of the point filling pixel according to the point filling mark.

13. A computer program, wherein the computer program is configured to implement the point cloud filling method according to any one of claims 1 to 11.


**Patentansprüche**

1. Ein Punktwolken-Auffüllverfahren, umfassend:

Erhalten von Punktwolkendaten, die von einem LiDAR erfasst wurden;
Bestimmen einer Position eines punktfehlenden Pixels aus den Punktwolkendaten, wobei die Position des punktfehlenden Pixels sich auf die Pixelposition bezieht, der Erfassungsdaten fehlen;
Bestimmen eines Konzentrationsmerkmalwerts einer Punktwolke in einer Umgebung der Position des punktfehlenden Pixels, wobei der Konzentrationsmerkmalwert den Grad der Konsistenz der Erfassungsdaten der Punktwolke in der Umgebung der Position des punktfehlenden Pixels darstellt, und wobei das Bestimmen umfasst:

- Konstruieren einer ersten transversalen Umgebung mit der Position des punktfehlenden Pixels als Mittelpunkt;
- Erhalten einer Punktwolke in der ersten transversalen Umgebung;
- Bestimmen eines transversalen Konzentrationsmerkmalwerts gemäß der Punktwolke in der ersten transversalen Umgebung;
- Konstruieren einer ersten longitudinalen Umgebung mit der Position des punktfehlenden Pixels als Mittelpunkt;
- Erhalten einer Punktwolke in der ersten longitudinalen Umgebung; und
- Bestimmen eines longitudinalen Konzentrationsmerkmalwerts gemäß der Punktwolke in der ersten longitudinalen Umgebung;

Bestimmen, ob der Konzentrationsmerkmalwert eine Konzentrationsschwellenanforderung erfüllt, und Erhalten eines Glättungsmerkmalwerts der Punktwolke in der Umgebung der Position des punktfehlenden Pixels gemäß einem Ergebnis der Bestimmung, wobei der Glättungsmerkmalwert den Grad der Entfernungsglattheit der Punktwolke in der mit der punktfehlenden Pixelposition als Mittelpunkt konstruierten Umgebung darstellt;
Bestimmen einer Punktauffüllmarkierung der Position des punktfehlenden Pixels gemäß dem Glättungsmerkmalwert;
wenn die Punktauffüllmarkierung eine voreingestellte Anforderung erfüllt, Bestimmen der Position des punktfehlenden Pixels als eine Position eines punktauffüllenden Pixels; und Durchführen einer Punktwolken-Auffüllung auf der Position des punktauffüllenden Pixels gemäß der Punktauffüllmarkierung.

2. Das Punktwolken-Auffüllverfahren nach Anspruch 1,
wobei das Bestimmen des transversalen Konzentrationsmerkmalwerts gemäß der Punktwolke in der ersten transversalen Umgebung umfasst:

Erhalten eines ersten Entfernungsmedians von Entfernungen einer Mehrzahl von Pixeln, die in der Punktwolke in der ersten transversalen Umgebung enthalten sind; und
Zählen einer Anzahl von Pixeln der Mehrzahl von Pixeln, wobei eine Differenz zwischen den Entfernungen der Mehrzahl von Pixeln und dem ersten Entfernungsmedian der Entfernungen der Mehrzahl von Pixel kleiner als ein erster Schwellenwert ist, als den transversalen Konzentrationsmerkmalwert; und
wobei das Bestimmen des longitudinalen Konzentrationsmerkmalwerts gemäß der Punktwolke in der ersten longitudinalen Umgebung umfasst:

Erhalten eines zweiten Entfernungsmedians von Entfernungen einer Mehrzahl von Pixeln, die in der Punktwolke in der ersten longitudinalen Umgebung enthalten sind; und
Zählen einer Anzahl von Pixeln der Mehrzahl von Pixeln, wobei eine Differenz zwischen den Entfernungen der Mehrzahl von Pixeln und dem zweiten Entfernungsmedian der Entfernungen der Mehrzahl von Pixel kleiner als ein zweiter Schwellenwert ist, als den longitudinalen Konzentrationsmerkmalwert.

3. Das Punktwolken-Auffüllverfahren nach Anspruch 2, wobei das Bestimmen, ob der Konzentrationsmerkmalwert die Konzentrationsschwellenanforderung erfüllt, und das Erhalten des Glättungsmerkmalwerts der Punktwolke in der Umgebung der Position des punktfehlenden Pixels gemäß einem Ergebnis der Bestimmung umfasst:

wenn der transversale Konzentrationsmerkmalwert größer als der Konzentrationsschwellenwert ist, Erhalten eines ersten Glättungsmerkmalwerts der Punktwolke in der ersten transversalen Umgebung; und
wenn der longitudinale Konzentrationsmerkmalwert größer als der Konzentrationsschwellenwert ist, Erhalten eines zweiten Glättungsmerkmalwerts der Punktwolke in der ersten longitudinalen Umgebung.

4. Das Punktwolken-Auffüllverfahren nach Anspruch 3, wobei das Bestimmen, ob der Konzentrationsmerkmalwert die Konzentrationsschwellenanforderung erfüllt, und das Erhalten des Glättungsmerkmalwerts der Punktwolke in der Umgebung der Position des punktfehlenden Pixels gemäß einem Ergebnis der Bestimmung umfasst:
wenn der transversale Konzentrationsmerkmalwert kleiner oder gleich dem Konzentrationsschwellenwert ist, Durchführen des Schritts des Erhaltens des zweiten Glättungsmerkmalwerts der Punktwolke in der ersten longitudinalen Umgebung, wenn der longitudinale Konzentrationsmerkmalwert größer als der Konzentrationsschwellenwert ist.

5. Das Punktwolken-Auffüllverfahren nach Anspruch 3, wobei das Erhalten des ersten Glättungsmerkmalwerts der Punktwolke in der ersten transversalen Umgebung umfasst:

Erhalten eines ersten Pixelsatzes in der Punktwolke in der ersten transversalen Umgebung, wobei jeder Pixel in dem ersten Pixelsatz eine Differenz zwischen einer Entfernung des Pixels und dem ersten Entfernungsmedian der Entfernungen der Mehrzahl von Pixeln aufweist, die kleiner als ein fünfter Schwellenwert ist; und
Berechnen eines ersten Differenzenquotienten unter Verwendung der Entfernung jedes Pixels in dem ersten Pixelsatz und Verwenden des ersten Differenzenquotienten als den ersten Glättungsmerkmalwert; wobei der erste Differenzenquotient berechnet wird als:

$$Smoothcoef_1 = \frac{\sum_{i=2}^{DensePointCnt_1} abs(d(ValidIdx(i)) - d(ValidIdx(i-1))}{DensePointCnt_1}$$

wobei $Smoothcoef_1$ den ersten Differenzenquotienten darstellt, i einen Index des Pixels in dem ersten Pixelsatz darstellt, $DensePointCnt_1$ eine Anzahl von Pixeln in dem ersten Pixelsatz darstellt, und $d(ValidIdx(i))$, $d(ValidIdx(i-1))$ die Entfernung des Pixels darstellt; oder
wobei das Erhalten des zweiten Glättungsmerkmalwerts der Punktwolke in der ersten longitudinalen Umgebung umfasst:

Erhalten eines zweiten Pixelsatzes in der Punktwolke in der ersten longitudinalen Umgebung, wobei jeder Pixel in dem zweiten Pixelsatz eine Differenz zwischen einer Entfernung des Pixels und dem zweiten Entfernungsmedian der Entfernungen der Mehrzahl von Pixeln aufweist, die kleiner als ein sechster Schwellenwert ist; und
Berechnen eines zweiten Differenzenquotienten unter Verwendung der Entfernung jedes Pixels in dem zweiten Pixelsatz und Verwenden des zweiten Differenzenquotienten als den zweiten Glättungsmerkmalwert; wobei der zweite Differenzenquotient berechnet wird als:

$$Smoothcoef_2 = \frac{\sum_{j=2}^{DensePointCnt_2} abs(d(ValidIdx(j)) - d(ValidIdx(j-1))}{DensePointCnt_2}$$

wobei $Smoothcoef_1$ den zweiten Differenzenquotienten darstellt, j einen Index des Pixels in dem zweiten Pixelsatz darstellt, $DensePointCnt_2$ eine Anzahl von Pixeln in dem zweiten Pixelsatz darstellt, und $d(ValidIdx(j))$, $d(ValidIdx(j-1))$ die Entfernung des Pixels darstellt.

6. Das Punktwolken-Auffüllverfahren nach Anspruch 3, wobei das Bestimmen der Punktauffüllmarkierung der Position des punktfehlenden Pixels gemäß dem Glättungsmerkmalwert umfasst:

wenn der erste Glättungsmerkmalwert kleiner als ein Glättungsschwellenwert ist, Bestimmen, dass eine transversale Punktauffüllmarkierung der Position des punktfehlenden Pixels eine erste Markierung ist; andernfalls ist die transversale Punktauffüllmarkierung eine zweite Markierung, und die erste Markierung unterscheidet sich von der zweiten Markierung; und

wenn der zweite Glättungsmerkmalwert kleiner als der Glättungsschwellenwert ist, Bestimmen, dass eine longitudinale Punktauffüllmarkierung der Position des punktfehlenden Pixels die erste Markierung ist; andernfalls ist die longitudinale Punktauffüllmarkierung die zweite Markierung.

7. Das Punktwolken-Auffüllverfahren nach Anspruch 6, wobei, wenn die Punktauffüllmarkierung eine voreingestellte Anforderung erfüllt, das Bestimmen der Position des punktfehlenden Pixels als die Position des punktauffüllenden Pixels umfasst:
   wenn die transversale Punktauffüllmarkierung die erste Markierung ist oder die longitudinale Punktauffüllmarkierung die erste Markierung ist, Bestimmen der Position des punktfehlenden Pixels als die Position des punktauffüllenden Pixels.

8. Das Punktwolken-Auffüllverfahren nach Anspruch 6, wobei das Durchführen der Punktwolken-Auffüllung auf der Position des punktauffüllenden Pixels gemäß der Punktauffüllmarkierung umfasst:

   Erhalten einer transversalen Referenzentfernung, einer transversalen Referenzreflektivitätsliste, einer longitudinalen Referenzentfernung und einer longitudinalen Referenzreflektivitätsliste der Position des punktauffüllenden Pixels;
   Bestimmen einer Punktauffüllentfernung und einer Punktauffüllreflektivität gemäß der Punktauffüllmarkierung, der transversalen Referenzentfernung, der transversalen Referenzreflektivitätsliste, der longitudinalen Referenzentfernung und der longitudinalen Referenzreflektivitätsliste; und
   Durchführen der Punktwolken-Auffüllung auf der Position des punktauffüllenden Pixels gemäß der Punktauffüllentfernung und der Punktauffüllreflektivität.

9. Das Punktwolken-Auffüllverfahren nach Anspruch 8, wobei das Bestimmen der Punktauffüllentfernung gemäß der Punktauffüllmarkierung, der transversalen Referenzentfernung, der transversalen Referenzreflektivitätsliste, der longitudinalen Referenzentfernung und der longitudinalen Referenzreflektivitätsliste umfasst:

   wenn die transversale Punktauffüllmarkierung die erste Markierung ist und die longitudinale Punktauffüllmarkierung die erste Markierung ist, eine Differenz zwischen der transversalen Referenzentfernung und der longitudinalen Referenzentfernung kleiner als ein Entfernungsschwellenwert ist, Bestimmen, dass die transversale Referenzentfernung die Punktauffüllentfernung ist; oder
   wenn die transversale Punktauffüllmarkierung die erste Markierung ist und die longitudinale Punktauffüllmarkierung die zweite Markierung ist, Bestimmen, dass die transversale Referenzentfernung die Punktauffüllentfernung ist; oder
   wenn die transversale Punktauffüllmarkierung die zweite Markierung ist und die longitudinale Punktauffüllmarkierung die erste Markierung ist, Bestimmen, dass die longitudinale Referenzentfernung die Punktauffüllentfernung ist.

10. Das Punktwolken-Auffüllverfahren nach Anspruch 8, wobei das Bestimmen der Punktauffüllreflektivität gemäß der Punktauffüllmarkierung, der transversalen Referenzentfernung, der transversalen Referenzreflektivitätsliste, der longitudinalen Referenzentfernung und der longitudinalen Referenzreflektivitätsliste umfasst:
    wenn die transversale Punktauffüllmarkierung die erste Markierung ist und die longitudinale Punktauffüllmarkierung die erste Markierung ist:

    eine Differenz zwischen Reflektivitäten der transversalen Referenzreflektivitätsliste kleiner als ein Reflektivitätsschwellenwert ist, und Bestimmen, dass eine durchschnittliche Reflektivität der transversalen Referenzreflektivitätsliste die Punktauffüllreflektivität ist; oder
    eine Differenz zwischen Reflektivitäten der transversalen Referenzreflektivitätsliste größer oder gleich dem Reflektivitätsschwellenwert ist, eine Differenz zwischen Reflektivitäten der longitudinalen Referenzreflektivitätsliste kleiner als der Reflektivitätsschwellenwert ist, Bestimmen, dass eine durchschnittliche Reflektivität der longitudinalen Referenzreflektivitätsliste die Punktauffüllreflektivität ist; oder
    Bestimmen, dass eine minimale Reflektivität der transversalen Referenzreflektivitätsliste die Punktauffüllreflektivität ist; oder
    wenn die transversale Punktauffüllmarkierung die erste Markierung ist und die longitudinale Punktauffüllmarkierung die zweite Markierung ist:

eine Differenz zwischen Reflektivitäten der transversalen Referenzreflektivitätsliste kleiner als der Reflektivitätsschwellenwert ist, Bestimmen, dass eine durchschnittliche Reflektivität der transversalen Referenzreflektivitätsliste die Punktauffüllreflektivität ist; oder

eine Differenz zwischen Reflektivitäten der transversalen Referenzreflektivitätsliste größer oder gleich dem Reflektivitätsschwellenwert ist, Bestimmen, dass eine minimale Reflektivität der transversalen Referenzreflektivitätsliste die Punktauffüllreflektivität ist; oder

wenn die transversale Punktauffüllmarkierung die zweite Markierung ist und die longitudinale Punktauffüllmarkierung die erste Markierung ist:

eine Differenz zwischen Reflektivitäten der longitudinalen Referenzreflektivitätsliste kleiner als der Reflektivitätsschwellenwert ist, Bestimmen, dass eine durchschnittliche Reflektivität der longitudinalen Referenzreflektivitätsliste die Punktauffüllreflektivität ist; oder

eine Differenz zwischen Reflektivitäten der longitudinalen Referenzreflektivitätsliste größer oder gleich dem Reflektivitätsschwellenwert ist, Bestimmen, dass eine minimale Reflektivität der longitudinalen Referenzreflektivitätsliste die Punktauffüllreflektivität ist.

11. Das Punktwolken-Auffüllverfahren nach Anspruch 8, wobei das Erhalten der transversalen Referenzentfernung, der transversalen Referenzreflektivitätsliste, der longitudinalen Referenzentfernung und der longitudinalen Referenzreflektivitätsliste des punktauffüllenden Pixels umfasst:

Konstruieren einer zweiten transversalen Umgebung mit dem punktauffüllenden Pixel als Mittelpunkt, und Erhalten eines dritten Pixelsatzes in der Punktwolke in der zweiten transversalen Umgebung, wobei jeder Pixel in dem dritten Pixelsatz eine Differenz zwischen einer Entfernung des Pixels und einem dritten Entfernungsmedian der Entfernungen der Mehrzahl von Pixeln aufweist, die kleiner als ein dritter Schwellenwert ist, wobei der dritte Entfernungsmedian der Entfernungen ein Median der Entfernungen aller Pixel in der Punktwolke in der zweiten transversalen Umgebung ist;

Erhalten eines transversalen Interpolationskoeffizienten jedes Pixels in dem dritten Pixelsatz; Bestimmen der transversalen Referenzentfernung gemäß dem transversalen Interpolationskoeffizienten jedes Pixels in dem dritten Pixelsatz und Entfernungsdaten jedes Pixels;

Bestimmen der transversalen Referenzreflektivitätsliste gemäß Reflektivitätsdaten von zwei Pixeln, die an das punktauffüllende Pixel in dem dritten Pixelsatz angrenzen;

Konstruieren einer zweiten longitudinalen Umgebung mit dem punktauffüllenden Pixel als Mittelpunkt, und Erhalten eines vierten Pixelsatzes in der Punktwolke in der zweiten longitudinalen Umgebung, wobei jeder Pixel in dem vierten Pixelsatz eine Differenz zwischen einer Entfernung des Pixels und einem vierten Entfernungsmedian der Entfernungen der Mehrzahl von Pixeln aufweist, die kleiner als ein vierter Schwellenwert ist, wobei der vierte Entfernungsmedian der Entfernungen ein Median der Entfernungen aller Pixel in der Punktwolke in der zweiten longitudinalen Umgebung ist;

Erhalten eines longitudinalen Interpolationskoeffizienten jedes Pixels in dem vierten Pixelsatz;

Bestimmen der longitudinalen Referenzentfernung gemäß dem longitudinalen Interpolationskoeffizienten jedes Pixels in dem vierten Pixelsatz und Entfernungsdaten jedes Pixels; und

Bestimmen der longitudinalen Referenzreflektivitätsliste gemäß Reflektivitätsdaten von zwei Pixeln, die an das punktauffüllende Pixel in dem vierten Pixelsatz angrenzen.

12. Eine Punktwolken-Auffüllvorrichtung, umfassend:

ein Punktfehl-Pixel-Bestimmungsmodul, konfiguriert zum Erhalten von Punktwolkendaten, die von einem LiDAR erfasst wurden, und zum Bestimmen einer Position eines punktfehlenden Pixels aus den Punktwolkendaten, wobei die Position des punktfehlenden Pixels sich auf die Pixelposition bezieht, der Erfassungsdaten fehlen;

ein Erfassungsmodul, konfiguriert zum Erhalten einer Punktauffüllmarkierung der Position des punktfehlenden Pixels; wobei das Erhalten umfasst: Bestimmen eines Konzentrationsmerkmalwerts einer Punktwolke in einer Umgebung der Position des punktfehlenden Pixels, wobei der Konzentrationsmerkmalwert den Grad der Konsistenz der Erfassungsdaten der Punktwolke in der Umgebung der Position des punktfehlenden Pixels darstellt, und wobei das Bestimmen umfasst:

- Konstruieren einer ersten transversalen Umgebung mit der Position des punktfehlenden Pixels als Mittelpunkt;

- Erhalten einer Punktwolke in der ersten transversalen Umgebung;
- Bestimmen eines transversalen Konzentrationsmerkmalwerts gemäß der Punktwolke in der ersten transversalen Umgebung;
- Konstruieren einer ersten longitudinalen Umgebung mit der Position des punktfehlenden Pixels als Mittelpunkt;
- Erhalten einer Punktwolke in der ersten longitudinalen Umgebung; und
- Bestimmen eines longitudinalen Konzentrationsmerkmalwerts gemäß der Punktwolke in der ersten longitudinalen Umgebung;

Bestimmen, ob der Konzentrationsmerkmalwert eine Konzentrationsschwellenanforderung erfüllt, und Erhalten eines Glättungsmerkmalwerts der Punktwolke in der Umgebung der Position des punktfehlenden Pixels gemäß einem Ergebnis der Bestimmung, wobei der Glättungsmerkmalwert den Grad der Entfernungsglattheit der Punktwolke in der mit der punktfehlenden Pixelposition als Mittelpunkt konstruierten Umgebung darstellt;
Bestimmen der Punktauffüllmarkierung der Position des punktfehlenden Pixels gemäß dem Glättungsmerkmalwert;
ein Punktauffüll-Pixel-Bestimmungsmodul, konfiguriert zum Bestimmen der Position des punktfehlenden Pixels als eine Position eines punktauffüllenden Pixels, wenn die Punktauffüllmarkierung eine voreingestellte Anforderung erfüllt; und
ein Auffüllmodul, konfiguriert zum Durchführen einer Punktwolken-Auffüllung auf der Position des punktauffüllenden Pixels gemäß der Punktauffüllmarkierung.

**13.** Ein Computerprogramm, wobei das Computerprogramm konfiguriert ist, das Punktwolken-Auffüllverfahren nach einem der Ansprüche 1 bis 11 zu implementieren.

**Revendications**

**1.** Procédé de remplissage de nuage de points, comprenant :

l'obtention de données de nuage de points collectées par un LiDAR ;
la détermination d'une position d'un pixel de point manquant à partir des données de nuage de points, ladite position du pixel de point manquant se référant à la position du pixel qui manque de données de détection ;
la détermination d'une valeur caractéristique de concentration d'un nuage de points dans un voisinage de la position du pixel de point manquant, ladite valeur caractéristique de concentration représentant le degré de cohérence des données de détection du nuage de points dans le voisinage de la position du pixel de point manquant, et ladite détermination comprenant :

- la construction d'un premier voisinage transversal ayant pour centre la position du pixel de point manquant ;
- l'obtention d'un nuage de points dans le premier voisinage transversal ;
- la détermination d'une valeur caractéristique de concentration transversale selon le nuage de points dans le premier voisinage transversal ;
- la construction d'un premier voisinage longitudinal ayant pour centre la position du pixel de point manquant ;
- l'obtention d'un nuage de points dans le premier voisinage longitudinal ; et
- la détermination d'une valeur caractéristique de concentration longitudinale selon le nuage de points dans le premier voisinage longitudinal ;

la détermination du fait que la valeur caractéristique de concentration satisfait ou non à une exigence de seuil de concentration, et l'obtention d'une valeur caractéristique de lissage du nuage de points dans le voisinage de la position du pixel de point manquant selon un résultat de la détermination, ladite valeur caractéristique de lissage représentant le degré de régularité de distance du nuage de points dans le voisinage construit avec pour centre la position du pixel de point manquant ;
la détermination d'une marque de remplissage de point de la position du pixel de point manquant selon la valeur caractéristique de lissage ;
lorsque la marque de remplissage de point satisfait à une exigence prédéfinie, la détermination de la position du pixel de point manquant comme étant une position d'un pixel de remplissage de point ; et
l'exécution d'un remplissage de nuage de points sur la position du pixel de remplissage de point selon la marque de remplissage de point.

**2.** Procédé de remplissage de nuage de points selon la revendication 1,
dans lequel la détermination de la valeur caractéristique de concentration transversale selon le nuage de points dans le premier voisinage transversal comprend :

l'obtention d'une première médiane de distance des distances d'une pluralité de pixels contenus dans le nuage de points dans le premier voisinage transversal ; et
le décompte d'une quantité de pixels de ladite pluralité de pixels dont une différence entre les distances de ladite pluralité de pixels et la première médiane de distance des distances de ladite pluralité de pixels est inférieure à un premier seuil, comme étant la valeur caractéristique de concentration transversale ; et
dans lequel la détermination de la valeur caractéristique de concentration longitudinale selon le nuage de points dans le premier voisinage longitudinal comprend :

l'obtention d'une deuxième médiane de distance des distances d'une pluralité de pixels contenus dans le nuage de points dans le premier voisinage longitudinal ; et
le décompte d'une quantité de pixels de ladite pluralité de pixels dont une différence entre les distances de ladite pluralité de pixels et la deuxième médiane de distance des distances de ladite pluralité de pixels est inférieure à un deuxième seuil, comme étant la valeur caractéristique de concentration longitudinale.

**3.** Procédé de remplissage de nuage de points selon la revendication 2, dans lequel la détermination du fait que la valeur caractéristique de concentration satisfait ou non à l'exigence de seuil de concentration, et l'obtention de la valeur caractéristique de lissage du nuage de points dans le voisinage de la position du pixel de point manquant selon un résultat de la détermination comprennent :

lorsque la valeur caractéristique de concentration transversale est supérieure au seuil de concentration, l'obtention d'une première valeur caractéristique de lissage du nuage de points dans le premier voisinage transversal ; et
lorsque la valeur caractéristique de concentration longitudinale est supérieure au seuil de concentration, l'obtention d'une deuxième valeur caractéristique de lissage du nuage de points dans le premier voisinage longitudinal.

**4.** Procédé de remplissage de nuage de points selon la revendication 3, dans lequel la détermination du fait que la valeur caractéristique de concentration satisfait ou non à l'exigence de seuil de concentration, et l'obtention de la valeur caractéristique de lissage du nuage de points dans le voisinage de la position du pixel de point manquant selon un résultat de la détermination comprennent :
lorsque la valeur caractéristique de concentration transversale est inférieure ou égale au seuil de concentration, l'exécution de l'étape d'obtention de la deuxième valeur caractéristique de lissage du nuage de points dans le premier voisinage longitudinal, lorsque la valeur caractéristique de concentration longitudinale est supérieure au seuil de concentration.

**5.** Procédé de remplissage de nuage de points selon la revendication 3,
dans lequel l'obtention de la première valeur caractéristique de lissage du nuage de points dans le premier voisinage transversal comprend :

l'obtention d'un premier ensemble de pixels dans le nuage de points dans le premier voisinage transversal, chaque pixel dans le premier ensemble de pixels ayant une différence entre une distance du pixel et la première médiane de distance des distances de la pluralité de pixels qui est inférieure à un cinquième seuil ; et
le calcul d'un premier quotient de différence en utilisant la distance de chaque pixel dans le premier ensemble de pixels, et l'utilisation du premier quotient de différence comme première valeur caractéristique de lissage ; où le premier quotient de différence est calculé comme suit :

$$Smoothcoef_1 = \frac{\sum_{i=2}^{DensePointCnt_1} abs(d(ValidIdx(i)) - d(ValidIdx(i-1)))}{DensePointCnt_1}$$

où $Smoothcoef_1$ représente le premier quotient de différence, i représente un indice du pixel dans le premier ensemble de pixels, $DensePointCnt_1$ représente un nombre de pixels dans le premier ensemble de pixels, et *d(ValidIdx(i)), d(ValidIdx(i-1))* représentent la distance du pixel; ou
dans lequel l'obtention de la deuxième valeur caractéristique de lissage du nuage de points dans le premier voisinage longitudinal comprend :

l'obtention d'un deuxième ensemble de pixels dans le nuage de points dans le premier voisinage longitudinal, chaque pixel dans le deuxième ensemble de pixels ayant une différence entre une distance du pixel et la deuxième médiane de distance des distances de la pluralité de pixels qui est inférieure à un sixième seuil ; et le calcul d'un deuxième quotient de différence en utilisant la distance de chaque pixel dans le deuxième ensemble de pixels, et l'utilisation du deuxième quotient de différence comme deuxième valeur caractéristique de lissage ; où le deuxième quotient de différence est calculé comme suit :

$$Smoothcoef_2 = \frac{\sum_{j=2}^{DensePointCnt_2} abs(d(ValidIdx(j)) - d(ValidIdx(j-1))}{DensePointCnt_2}$$

où *Smoothcoef₁* représente le deuxième quotient de différence, j représente un indice du pixel dans le deuxième ensemble de pixels, *DensePointCnt₂* représente un nombre de pixels dans le deuxième ensemble de pixels, et *d(ValidIdx(j)), d(ValidIdx(j-1))* représentent la distance du pixel.

6. Procédé de remplissage de nuage de points selon la revendication 3, dans lequel la détermination de la marque de remplissage de point de la position du pixel de point manquant selon la valeur caractéristique de lissage comprend :

lorsque la première valeur caractéristique de lissage est inférieure à un seuil de lissage, la détermination qu'une marque de remplissage de point transversale de la position du pixel de point manquant est une première marque ; sinon, la marque de remplissage de point transversale est une deuxième marque, et la première marque est différente de la deuxième marque ; et
lorsque la deuxième valeur caractéristique de lissage est inférieure au seuil de lissage, la détermination qu'une marque de remplissage de point longitudinale de la position du pixel de point manquant est la première marque ; sinon, la marque de remplissage de point longitudinale est la deuxième marque.

7. Procédé de remplissage de nuage de points selon la revendication 6, dans lequel, lorsque la marque de remplissage de point satisfait à une exigence prédéfinie, la détermination de la position du pixel de point manquant comme étant la position du pixel de remplissage de point comprend :
lorsque la marque de remplissage de point transversale est la première marque ou la marque de remplissage de point longitudinale est la première marque, la détermination de la position du pixel de point manquant comme étant la position du pixel de remplissage de point.

8. Procédé de remplissage de nuage de points selon la revendication 6, dans lequel l'exécution du remplissage de nuage de points sur la position du pixel de remplissage de point selon la marque de remplissage de point comprend :

l'obtention d'une distance de référence transversale, d'une liste de réflectance de référence transversale, d'une distance de référence longitudinale et d'une liste de réflectance de référence longitudinale de la position du pixel de remplissage de point ;
la détermination d'une distance de remplissage de point et d'une réflectance de remplissage de point selon la marque de remplissage de point, la distance de référence transversale, la liste de réflectance de référence transversale, la distance de référence longitudinale et la liste de réflectance de référence longitudinale ; et
l'exécution du remplissage de nuage de points sur la position du pixel de remplissage de point selon la distance de remplissage de point et la réflectance de remplissage de point.

9. Procédé de remplissage de nuage de points selon la revendication 8, dans lequel la détermination de la distance de remplissage de point selon la marque de remplissage de point, la distance de référence transversale, la liste de réflectance de référence transversale, la distance de référence longitudinale et la liste de réflectance de référence longitudinale comprend :

lorsque la marque de remplissage de point transversale est la première marque et la marque de remplissage de point longitudinale est la première marque, et qu'une différence entre la distance de référence transversale et la distance de référence longitudinale est inférieure à un seuil de distance, la détermination que la distance de référence transversale est la distance de remplissage de point ; ou

lorsque la marque de remplissage de point transversale est la première marque et la marque de remplissage de point longitudinale est la deuxième marque, la détermination que la distance de référence transversale est la distance de remplissage de point ; ou

lorsque la marque de remplissage de point transversale est la deuxième marque et la marque de remplissage de point longitudinale est la première marque, la détermination que la distance de référence longitudinale est la distance de remplissage de point.

10. Procédé de remplissage de nuage de points selon la revendication 8, dans lequel la détermination de la réflectance de remplissage de point selon la marque de remplissage de point, la distance de référence transversale, la liste de réflectance de référence transversale, la distance de référence longitudinale et la liste de réflectance de référence longitudinale comprend :
lorsque la marque de remplissage de point transversale est la première marque et la marque de remplissage de point longitudinale est la première marque :

une différence entre des réflectances de la liste de réflectance de référence transversale est inférieure à un seuil de réflectance, et la détermination qu'une réflectance moyenne de la liste de réflectance de référence transversale est la réflectance de remplissage de point ; ou
une différence entre des réflectances de la liste de réflectance de référence transversale est supérieure ou égale au seuil de réflectance, et une différence entre des réflectances de la liste de réflectance de référence longitudinale est inférieure au seuil de réflectance, la détermination qu'une réflectance moyenne de la liste de réflectance de référence longitudinale est la réflectance de remplissage de point ; ou
la détermination qu'une réflectance minimale de la liste de réflectance de référence transversale est la réflectance de remplissage de point ; ou
lorsque la marque de remplissage de point transversale est la première marque et la marque de remplissage de point longitudinale est la deuxième marque :

une différence entre des réflectances de la liste de réflectance de référence transversale est inférieure au seuil de réflectance, la détermination qu'une réflectance moyenne de la liste de réflectance de référence transversale est la réflectance de remplissage de point ; ou
une différence entre des réflectances de la liste de réflectance de référence transversale est supérieure ou égale au seuil de réflectance, la détermination qu'une réflectance minimale de la liste de réflectance de référence transversale est la réflectance de remplissage de point ; ou
lorsque la marque de remplissage de point transversale est la deuxième marque et la marque de remplissage de point longitudinale est la première marque :

une différence entre des réflectances de la liste de réflectance de référence longitudinale est inférieure au seuil de réflectance, la détermination qu'une réflectance moyenne de la liste de réflectance de référence longitudinale est la réflectance de remplissage de point ; ou
une différence entre des réflectances de la liste de réflectance de référence longitudinale est supérieure ou égale au seuil de réflectance, la détermination qu'une réflectance minimale de la liste de réflectance de référence longitudinale est la réflectance de remplissage de point.

11. Procédé de remplissage de nuage de points selon la revendication 8, dans lequel l'obtention de la distance de référence transversale, de la liste de réflectance de référence transversale,
de la distance de référence longitudinale et de la liste de réflectance de référence longitudinale du pixel de remplissage de point comprend :

la construction d'un deuxième voisinage transversal ayant pour centre le pixel de remplissage de point, et l'obtention d'un troisième ensemble de pixels dans le nuage de points dans le deuxième voisinage transversal, chaque pixel dans le troisième ensemble de pixels ayant une différence entre une distance du pixel et une troisième médiane de distance des distances de la pluralité de pixels qui est inférieure à un troisième seuil, ladite troisième médiane de distance des distances étant une médiane des distances de tous les pixels dans le nuage de points dans le deuxième voisinage transversal ;
l'obtention d'un coefficient d'interpolation transversale de chaque pixel dans le troisième ensemble de pixels ;
la détermination de la distance de référence transversale selon le coefficient d'interpolation transversale de chaque pixel dans le troisième ensemble de pixels et des données de distance de chaque pixel ;

la détermination de la liste de réflectance de référence transversale selon des données de réflectance de deux pixels adjacents au pixel de remplissage de point dans le troisième ensemble de pixels ;

la construction d'un deuxième voisinage longitudinal ayant pour centre le pixel de remplissage de point, et l'obtention d'un quatrième ensemble de pixels dans le nuage de points dans le deuxième voisinage longitudinal, chaque pixel dans le quatrième ensemble de pixels ayant une différence entre une distance du pixel et une quatrième médiane de distance des distances de la pluralité de pixels qui est inférieure à un quatrième seuil, ladite quatrième médiane de distance des distances étant une médiane des distances de tous les pixels dans le nuage de points dans le deuxième voisinage longitudinal ;

l'obtention d'un coefficient d'interpolation longitudinale de chaque pixel dans le quatrième ensemble de pixels ;

la détermination de la distance de référence longitudinale selon le coefficient d'interpolation longitudinale de chaque pixel dans le quatrième ensemble de pixels et des données de distance de chaque pixel ; et

la détermination de la liste de réflectance de référence longitudinale selon des données de réflectance de deux pixels adjacents au pixel de remplissage de point dans le quatrième ensemble de pixels.

**12.** Dispositif de remplissage de nuage de points, comprenant

un module de détermination de pixel de point manquant, configuré pour obtenir des données de nuage de points collectées par un LiDAR, et déterminer une position d'un pixel de point manquant à partir des données de nuage de points, ladite position du pixel de point manquant se référant à la position du pixel qui manque de données de détection ;

un module d'obtention, configuré pour obtenir une marque de remplissage de point de la position du pixel de point manquant ; ladite obtention comprenant : la détermination d'une valeur caractéristique de concentration d'un nuage de points dans un voisinage de la position du pixel de point manquant, ladite valeur caractéristique de concentration représentant le degré de cohérence des données de détection du nuage de points dans le voisinage de la position du pixel de point manquant, et ladite détermination comprenant :

- la construction d'un premier voisinage transversal ayant pour centre la position du pixel de point manquant ;
- l'obtention d'un nuage de points dans le premier voisinage transversal ;
- la détermination d'une valeur caractéristique de concentration transversale selon le nuage de points dans le premier voisinage transversal ;
- la construction d'un premier voisinage longitudinal ayant pour centre la position du pixel de point manquant ;
- l'obtention d'un nuage de points dans le premier voisinage longitudinal ; et
- la détermination d'une valeur caractéristique de concentration longitudinale selon le nuage de points dans le premier voisinage longitudinal ;

la détermination du fait que la valeur caractéristique de concentration satisfait ou non à une exigence de seuil de concentration, et l'obtention d'une valeur caractéristique de lissage du nuage de points dans le voisinage de la position du pixel de point manquant selon un résultat de la détermination, ladite valeur caractéristique de lissage représentant le degré de régularité de distance du nuage de points dans le voisinage construit avec pour centre la position du pixel de point manquant ;

la détermination de la marque de remplissage de point de la position du pixel de point manquant selon la valeur caractéristique de lissage ;

un module de détermination de pixel de remplissage de point, configuré pour déterminer la position du pixel de point manquant comme étant une position d'un pixel de remplissage de point lorsque la marque de remplissage de point satisfait à une exigence prédéfinie ; et

un module de remplissage, configuré pour exécuter un remplissage de nuage de points sur la position du pixel de remplissage de point selon la marque de remplissage de point.

**13.** Programme informatique, dans lequel le programme informatique est configuré pour mettre en œuvre le procédé de remplissage de nuage de points selon l'une quelconque des revendications 1 à 11.

FIG. 1

FIG. 2

| obtaining point cloud data collected by the LiDAR, and determining a position of a point missing pixel from the point cloud data | S10 |

| obtaining the point filling mark of The position of the point missing pixel | S20 |

| when the point filling mark meets the preset requirement, determining the point missing pixel position as the point filling pixel position | S30 |

| performing point cloud filling on the position of the point filling pixel according to the point filling mark | S40 |

FIG. 3

FIG. 4

obtaining point cloud data collected by the LiDAR, and determining a position of a point missing pixel from the point cloud data ⟋S10

↓

determining the concentration feature value of the point cloud in the neighborhood of the position of the point missing pixel ⟋S201

↓

determining whether the concentration feature value meets the concentration threshold requirement, and obtaining the smoothing feature value of the point cloud in the neighborhood of the point missing pixel according to the result of the determination ⟋S202

↓

determining the point filling mark of the point missing pixel based on the smoothing feature value ⟋S203

↓

when the point filling mark meets the preset requirement, determining the position of the point missing pixel as the position of the point filling pixel ⟋S30

↓

performing point cloud filling on the position of the point filling pixel according to the point filling mark ⟋S40

FIG. 5

obtaining point cloud data collected by the LiDAR, and determining a position of a point missing pixel from the point cloud data $\quad$ S10

obtaining the point filling mark of the position of the point missing pixel position $\quad$ S20

when the point filling mark meets the preset requirement, determining the position of the point missing pixel as the position of the point filling pixel $\quad$ S30

obtaining the transverse reference distance, transverse reference reflectivity list, longitudinal reference distance, and longitudinal reference reflectivity list of the position of the point filling pixel $\quad$ S401

determining the point filling distance and point filling reflectivity based on the point filling mark, the transverse reference distance, the transverse reference reflectivity list, the longitudinal reference distance, and the longitudinal reference reflectivity list $\quad$ S402

performing point cloud filling on the positon of the point filling pixel using the point filling distance and the point Filling reflectivity $\quad$ S403

FIG. 6

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311138998
- US 20210256740 A1
- US 20180190016 A1